(19) Europäisches Patentamt
European Patent Office
Office européen des brevets

(11) **EP 4 704 476 A1**

(12) **EUROPEAN PATENT APPLICATION**
published in accordance with Art. 153(4) EPC

(43) Date of publication:
**04.03.2026 Bulletin 2026/10**

(21) Application number: **24795570.1**

(22) Date of filing: **26.02.2024**

(51) International Patent Classification (IPC):
***H04W 68/00*** (2009.01)    ***H04W 8/24*** (2009.01)

(52) Cooperative Patent Classification (CPC):
**H04W 8/24; H04W 68/00; H04W 68/02**

(86) International application number:
**PCT/CN2024/078538**

(87) International publication number:
**WO 2024/222182 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 CN 202310484697**

(71) Applicant: **Datang Mobile Communications
Equipment Co., Ltd.
Beijing 100085 (CN)**

(72) Inventors:
- **CAO, Caihong
  Beijing 100085 (CN)**
- **XIONG, Chunshan
  Beijing 100085 (CN)**

(74) Representative: **Studio Torta S.p.A.
Via Viotti, 9
10121 Torino (IT)**

(54) **PAGING METHOD AND APPARATUS**

(57) Provided in the embodiments of the present disclosure are a paging method and apparatus. The method applied to a terminal comprises: determining a paging moment according to a first terminal identifier; and listening for a paging message at the paging moment, wherein the paging message is triggered by a core network, the first terminal identifier is related to a plurality of network function entities of the core network, and the first terminal identifier is received in advance and is used for identifying a terminal.

```
┌──────────────────────────────────────────────────────────────┐
│  Determine a paging occasion based on a first terminal identity │──── 410
└──────────────────────────────────────────────────────────────┘
                               │
                               ▼
┌──────────────────────────────────────────────────────────────┐
│   Monitor a paging message at the paging occasion, where the    │──── 420
│        paging message is triggered by a core network            │
└──────────────────────────────────────────────────────────────┘
```

FIG. 4

**Description**

CROSS-REFERENCES TO RELATED APPLICATIONS

The present application claims priority to Chinese patent application No. 202310484697.3, filed on April 28, 2023, entitled "Paging Method and Apparatus", which is hereby incorporated by reference in its entirety.

FIELD

The present application relates to the field of communication, and in particular, to paging methods and paging apparatuses.

BACKGROUND

In related art, a paging cycle and a 5G-short-temporary mobile subscription identity (5G-S-TMSI) are key factors used by a user equipment (UE) and a radio access network (RAN) to calculate a location of a paging frame (PF) and a specific paging occasion (PO). The 5G-S-TMSI, consisting of <AMF Set ID>+<AMF Pointer>+<5G-TMSI>, stores information about an access and mobility management function (AMF). Furthermore, the UE determines whether a paging message is triggered by a core network and whether a paged object is itself.

After being service-oriented, the RAN may interact directly with other network functions (NFs) in the core network (CN). NFs may directly initiate a paging for the UE in an idle or inactive state.

Therefore, how the UE determines a paging occasion in a RAN service-oriented scenario is an issue to be solved.

BRIEF SUMMARY

Embodiments of the present application provide paging methods and paging apparatuses to solve a problem that a terminal is unable to determine a paging occasion in a RAN service-oriented scenario.

An embodiment of the present application provides a paging method, performed by a terminal, including:

determining a paging occasion based on a first terminal identity; and

monitoring a paging message at the paging occasion, where the paging message is triggered by a core network;

where the first terminal identity is associated with multiple network functions of the core network, and the first terminal identity is pre-received and used to identify the terminal.

In an embodiment, the first terminal identity is any of following:

multiple identification identities, where each of the multiple identification identities is assigned to the terminal by a corresponding network function and used by the corresponding network function to identify the terminal;

a universal terminal identity, where the universal terminal identity is used by the core network to identify the terminal, and composed of multiple identification identities; or

a reference terminal identity, where the reference terminal identity is one of multiple identification identities.

In an embodiment, in case that the first terminal identity is the multiple identification identities, determining the paging occasion based on the first terminal identity includes:

calculating candidate paging occasions based on the multiple identification identities, respectively; and

determining the paging occasion from the candidate paging occasions.

In an embodiment, the method further includes:
transmitting an identification identity corresponding to the paging occasion and/or a paging cycle corresponding to the paging occasion to an access network device.

In an embodiment, the reference terminal identity is pre-agreed;

the reference terminal identity is determined through negotiation between the terminal and the access network device;

the reference terminal identity is determined through negotiation between the terminal and the core network; or

the reference terminal identity is received by the terminal from the access network device or from the core network.

In an embodiment, the method further includes:

negotiating a paging cycle with each of the multiple network functions; or

negotiating a paging cycle with a target network function, where the target network function is one of the multiple network functions;

where the paging cycle is used to determine the paging occasion.

In an embodiment, the method further includes:
in case that the paging message is received, determining, based on paging identity information carried in the paging message, a network function that triggers a paging.
In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

In an embodiment, the method further includes:
transmitting a service request message to an access network device, where the service request message is used to initiate a service request to the network function that triggers the paging.
An embodiment of the present application further provides a paging method, performed by an access network device, including:

receiving a paging message transmitted from a core network, where the paging message carries a second terminal identity;

determining a paging occasion based on the second terminal identity; and

transmitting the paging message to the terminal at the paging occasion;

where the second terminal identity is associated with multiple network functions of the core network.

In an embodiment, the second terminal identity is any of following:

a universal terminal identity, where the universal terminal identity is used by the core network to identify the terminal, the universal terminal identity is composed of multiple identification identities, each of the multiple identification identities is assigned to the terminal by a corresponding network function and used by the corresponding network function to identify the terminal; or

a reference terminal identity, where the reference terminal identity is one of multiple identification identities.

In an embodiment, the reference terminal identity is pre-agreed;

the reference terminal identity is determined through negotiation between the access network device and the terminal; or

the reference terminal identity is determined through negotiation between the access network device and the core network.

In an embodiment, the method further includes:

receiving a service request message transmitted from the terminal, where the service request message is used to initiate a service request to a network function that triggers a paging; and

transmitting the service request message to the network function that triggers the paging.

An embodiment of the present application provides a paging method, performed by a network function, including:

transmitting a paging message to an access network device, where the paging message carries a second terminal identity;

where the second terminal identity is associated with multiple network functions of the core network and is used by the access network device to determine a paging occasion.

In an embodiment, the second terminal identity is any of following:

a universal terminal identity, where the universal terminal identity is used by the core network to identify the terminal, the universal terminal identity is composed of multiple identification identities, each of the multiple identification is assigned to the terminal by a corresponding network function and used by the corresponding network function to identify the terminal; or

a reference terminal identity, where the reference terminal identity is one of multiple identification identities.

In an embodiment, the reference terminal identity is pre-agreed;

the reference terminal identity is determined through negotiation between the network function and the terminal;

the reference terminal identity is determined through negotiation between the network function and the access network device; or

the reference terminal identity is received by the network function from the terminal, or from the access network device.

In an embodiment, in case that the second terminal identity is the universal terminal identity, before transmitting the paging message to the access network device, the method further includes:

receiving the universal terminal identity synchronized by other network functions;
or

determining the universal terminal identity based on the multiple identification identities, synchronizing the universal terminal identity with other network functions, and transmitting the universal terminal identity to the terminal.

In an embodiment, the paging message further carries paging identity information, wherein the paging identity information is used to indicate a network function that triggers a paging to the terminal.
In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

In an embodiment, before transmitting the paging message to the access network device, the method further includes:

negotiating a paging cycle with the terminal;

negotiating a paging cycle with the terminal and synchronizing the paging cycle with other network functions; or

receiving a paging cycle synchronized by other network functions.

In an embodiment, the method further includes:
receiving a service request message transmitted from the access network device.

An embodiment of the present application provides a terminal, including: a memory, a transceiver, and a processor,

where the memory is used for storing a computer program; the transceiver is used for receiving and transmitting data under control of the processor; and the processor is used for reading the computer program stored in the memory and performing steps of the paging method performed by the terminal.

An embodiment of the present application provides an access network device, including a memory, a transceiver and a processor,

where the memory is used for storing a computer program; the transceiver is used for receiving and transmitting data under control of the processor; and the processor is used for reading the computer program stored in the memory and performing steps of the paging method performed by the access network device.

An embodiment of the present application provides a network function, including a memory, a transceiver, and a processor,

where the memory is used for storing a computer program; the transceiver is used for receiving and transmitting data under control of the processor; and the processor is used for reading the computer program stored in the memory and performing steps of the paging method performed by the network function.

An embodiment of the present application further provides a paging apparatus, for use in a terminal, including:

a first determining unit, used for determining a paging occasion based on a first terminal identity; and

a first monitoring unit, used for monitoring a paging message at the paging occasion, where the paging message is triggered by a core network;

where the first terminal identity is associated with multiple network functions of the core network, and the first terminal identity is pre-received and used to identify the terminal.

An embodiment of the present application further provides a paging apparatus, for use in an access network device, including:

a second receiving unit, used for receiving a paging message transmitted from a core network, where the paging message carries a second terminal identity;

a second determining unit, used for determining a paging occasion based on the second terminal identity; and

a second transmitting unit, used for transmitting the paging message to the terminal at the paging occasion;

where the second terminal identity is associated with multiple network functions of the core network.

An embodiment of the present application further provides a paging apparatus, for use in a network function, including:

a third transmitting unit, used for transmitting a paging message to an access network device, where the paging message carries a second terminal identity;

where the second terminal identity is associated with multiple network functions of the core network and is used by the access network device to determine a paging occasion.

An embodiment of the present application further provides a processor-readable storage medium storing a computer program, where the computer program causes a processor to perform the paging method performed by the terminal.

An embodiment of the present application further provides a processor-readable storage medium storing a computer program, where the computer program causes a processor to perform the paging method performed by the access network device.

An embodiment of the present application further provides a processor-readable storage medium storing a computer program, where the computer program causes a processor to perform the paging method performed by the network function.

In paging methods and paging apparatus provided by embodiments of the present application, a paging occasion is determined based on a terminal identity and a paging message is monitored or transmitted at the paging occasion to enable a terminal to determine the paging occasion and monitor the paging messages from different NFs at the paging occasion in the RAN service-oriented scenario.

BRIEF DESCRIPTION OF THE DRAWINGS

To clearly illustrate solutions in the embodiments of the present application or in related art, the drawings used in the description of the embodiments or in related art are briefly described below. The drawings in the following description are only some embodiments of the present application, and other drawings may be obtained according to these drawings without any creative effort for those skilled in the art.

FIG. 1 is a schematic diagram of a traditional N2 interface according to an embodiment of the present application;

FIG. 2 is a first schematic diagram of a radio access network (RAN) service-oriented architecture according to an embodiment of the present application;

FIG. 3 is a second schematic diagram of a radio access network (RAN) service-oriented architecture according to an embodiment of the present application;

FIG. 4 is a first schematic flowchart of a paging method according to an embodiment of the present application;

FIG. 5 is a second schematic flowchart of a paging method according to an embodiment of the present application;

FIG. 6 is a third schematic flowchart of a paging method according to an embodiment of the present application;

FIG. 7 is a schematic structural diagram of a universal terminal identity according to an embodiment of the present application;

FIG. 8 is a fourth schematic flowchart of a paging method according to an embodiment of the present application;

FIG. 9 is a first schematic flowchart of a method for generating a universal terminal identity according to an embodiment of the present application;

FIG. 10 is a second schematic flowchart of a method for generating a universal terminal identity according to an embodiment of the present application;

FIG. 11 is a fifth schematic flowchart of a paging method according to an embodiment of the present application;

FIG. 12 is a first schematic flowchart of synchronization of a paging cycle according to an embodiment of the present application;

FIG. 13 is a second schematic flowchart of synchronization of a paging cycle according to an embodiment of the present application;

FIG. 14 is a first schematic structural diagram of a paging apparatus according to an embodiment of the present application;

FIG. 15 is a second schematic structural diagram of a paging apparatus according to an embodiment of the present application;

FIG. 16 is a third schematic structural diagram of a paging apparatus according to an embodiment of the present application;

FIG. 17 is a schematic structural diagram of a terminal according to an embodiment of the present application;

FIG. 18 is a schematic structural diagram of an access network device according to an embodiment of the present application; and

FIG. 19 is a schematic structural diagram of a network function according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

The solutions in the embodiments of the present application may be applicable to various systems, especially 5th Generation (5G) mobile communication technology systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal may communicate with one or more core networks (CN) via a radio access network (RAN), and the wireless terminal may be a mobile terminal, such as a mobile phone (or cellular phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for the air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node, a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

In order to facilitate understanding of embodiments of the present application, terms or background associated with the embodiments of the present application are introduced below.

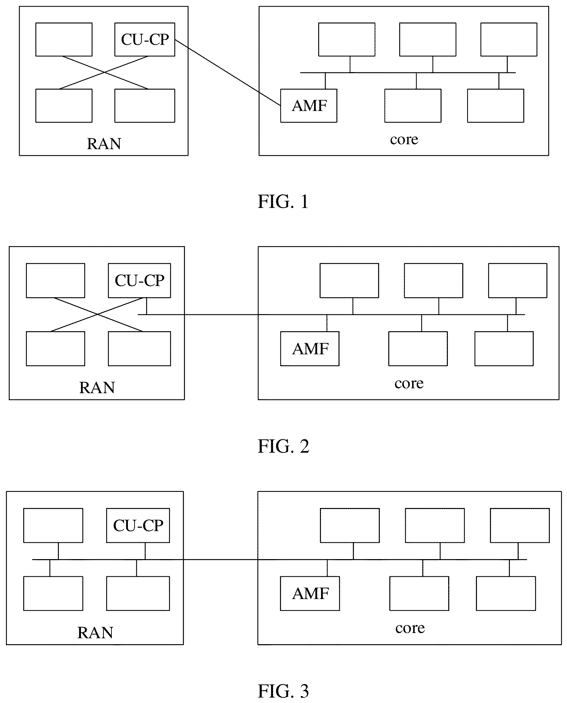

FIG. 1 is a schematic diagram of a traditional N2 interface according to an embodiment of the present application. As shown in FIG. 1, a CU-control plane of a base station is connected to the access and mobility management function (AMF) through the N2 interface.

FIG. 2 is a first schematic diagram of a radio access network (RAN) service-oriented architecture according to an embodiment of the present application; and FIG. 3 is a second schematic diagram of a radio access network (RAN) service-oriented architecture according to an embodiment of the present application. As shown in FIG. 2 and FIG. 3, in the RAN service-oriented scenario, the RAN may be connected to multiple network functions (NFs) in the core network.

A paging occasion in the traditional N2 interface scenario is calculated as follows.

For an idle and inactive terminal, the terminal only wakes up once per paging cycle at its corresponding paging occasion. Calculating the paging occasion of the terminal includes two steps:

step 1: determining a location of a paging frame (PF); and

step 2: determining the specific paging occasion (PO), where the PO is a start slot position in the paging frame calculated in the step 1 or in a subsequent frame to the paging frame.

Formulas for calculating the PF and the PO are as follows:

$$PF: (SFN+PF\_offset) \bmod T = (T \ div \ N)*(UE\_ID \bmod N);$$

$$PO: i\_s = floor(UE\_ID/N) \bmod Ns;$$

where SFN is a system frame number, PF_offset is an offset for the paging frame, T is a paging cycle; N is the number of PFs in a paging cycle; UE_ID is 5G-S-TMSI mod 1024; Ns is the number of POs associated with a PF; i_s is a logical sequence number of a PO after it is assigned to a PF.

A PF may include multiple POs. The first PO assigned to a PF always begins at the start of the PF, but all POs need strictly avoid an uplink slot position.

To address the problem of the lack of a solution for determining a paging occasion after the RAN is service-oriented, the present application provides a paging method for determining paging occasions after the RAN is service-oriented.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

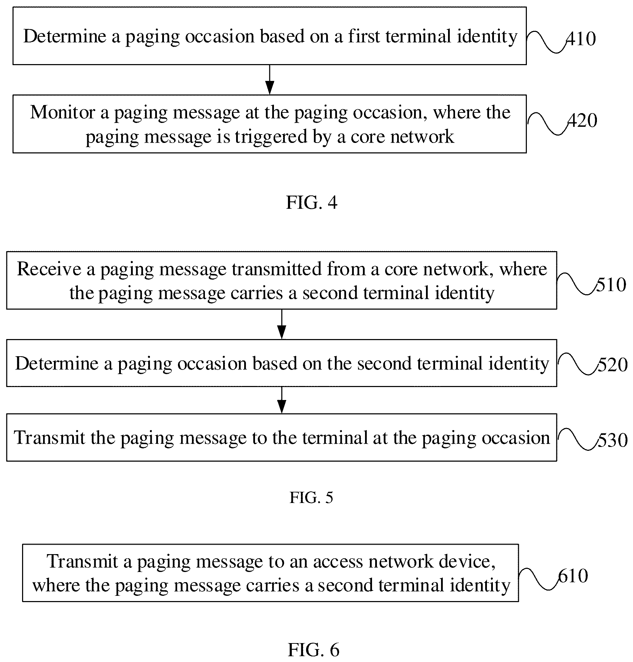

FIG. 4 is a first schematic flowchart of a paging method according to an embodiment of the present application. As shown in FIG. 4, an embodiment of the present application provides a paging method, performed by a terminal, including: step 410, determining a paging occasion based on a first terminal identity.

The first terminal identity is associated with multiple network functions of the core network, and the first terminal identity is pre-received and used to identify the terminal.

The first terminal identity may be assigned by a core network to the terminal. Exemplarily, the core network transmits the first terminal identity to an access network device, the access network device forwards the first terminal identity to the terminal.

The first terminal identity is associated with multiple network functions (NFs) of the core network, which may mean that the first terminal identity is jointly assigned to the terminal by multiple NFs of the core network, or is assigned to the terminal by one NF and then shared with multiple NFs, or is independently assigned to the terminal by multiple NFs, or is one of the first terminal identities independently assigned to the terminal by multiple NFs, or is determined based on identities independently assigned to the terminal by multiple NFs, or multiple NFs participate in the assignment, generation, transmission, and selection of the first terminal identity. It should be understood that the above examples are provided for the convenience of understanding the present application and should not limit the present application.

In an embodiment, the multiple network functions of the core network may be network functions that have interaction requirements with the terminal at the non-access stratum (NAS).

Step 420, monitoring a paging message at the paging occasion, where the paging message is triggered by a core network.

In an embodiment, the number of paging occasions in each paging cycle is one. The terminal may only wake up once at the paging occasion within a paging cycle T and monitor paging messages triggered by the core network.

In an embodiment, the terminal is in an idle state (IDLE).

In the paging method provided by embodiments of the present application, the terminal determines the paging occasion based on the first terminal identity to enable a terminal to determine the paging occasion and monitor the paging messages from different NFs at the paging occasion in the RAN service-oriented scenario.

In an embodiment, the first terminal identity is any of following:

multiple identification identities, where each of the multiple identification identities is assigned to the terminal by a corresponding network function and used by the corresponding network function to identify the terminal;

a universal terminal identity, where the universal terminal identity is used by the core network to identify the terminal, and composed of multiple identification identities; or

a reference terminal identity, where the reference terminal identity is one of multiple identification identities.

For each identification identity, each service type NF assigns an identification identity to the UE when serving the UE. It should be understood that this embodiment of the present application does not limit the specific structure of the identification identity, such as the fields, length, order, and meaning of each field. To facilitate the introduction of the present application, an identification identity may be referred simply to as $5G\text{-}S\text{-}TMSI_{NF}$. For example, an identity assigned to a UE by the AMF may be referred simply to $5G\text{-}S\text{-}TMSI_{AMF}$, an identity assigned to a UE by a session management function (SMF) may be referred simply to as $5G\text{-}S\text{-}TMSI_{SMF}$, and an identity assigned to a UE by a location management function (LMF) may be referred simply to as $5G\text{-}S\text{-}TMSI_{LMF}$. For other NFs, references are made to the AMF, SMF, and LMF and are not further described here.

It should be understood that the abbreviations used in the present application, such as $5G\text{-}S\text{-}TMSI_{NF}$ and $5G\text{-}S\text{-}TMSI'$, are for ease of introduction. The present application does not limit the application scenarios or the use of the various terms in the present application. Any term may be substituted for the names or abbreviations in the present application.

In an embodiment, in case that the first terminal identity is the multiple identification identities, determining the paging occasion based on the first terminal identity includes:

calculating candidate paging occasions based on the multiple identification identities, respectively; and

determining the paging occasion from the candidate paging occasion.

In an embodiment, the UE calculates different paging occasions PF and PO based on the $5G\text{-}S\text{-}TMSI_{NF}$ assigned by each NF, determines each pair of PF and PO as a candidate paging occasion, and then selects a pair of PF and PO from all candidate paging occasions as a final paging occasion. It should be understood that for the method for determining a paging occasion based on a pair of PF and PO, reference may be made to related art and the method is not further repeated here.

Exemplarily, the AMF, SMF, and LMF respectively assign the $5G\text{-}S\text{-}TMSI_{AMF}$, $5G\text{-}S\text{-}TMSI_{SMF}$, and $5G\text{-}S\text{-}TMSI_{LMF}$ to the UE, and calculate the PF and PO based on the formulas for calculating the PF and PO. The formulas for calculating PF and PO are described above and are not further repeated here. It should be understood that the UE_ID in the formulas for calculating the PF and PO may be substituted into the corresponding $5G\text{-}S\text{-}TMSI_{NF}$.

Taking the $5G\text{-}S\text{-}TMSI_{LMF}$ being an identification identity as an example, the formula for calculating the PF is as follows:

$$PF: (SFN+PF\_offset) \bmod T = (T \operatorname{div} N)*(UE\_ID \bmod N);$$

The formula for calculating the PO is as follows:

$$PO: i\_s = floor(UE\_ID/N) \bmod Ns;$$

where UE_ID is 5G-S-TMSILMF mod 1024.

Based on the $5G\text{-}S\text{-}TMSI_{AMF}$, $5G\text{-}S\text{-}TMSI_{SMF}$, and $5G\text{-}S\text{-}TMSI_{LMF}$, candidate paging occasions for the AMF are calculated: $PF_{AMF}$ and $PO_{AMF}$; candidate paging occasions for the SMF are calculated: $PF_{SMF}$ and $PO_{SMF}$; and candidate paging occasions for the LMF are calculated: $PF_{LMF}$ and $PO_{LMF}$.

In an embodiment, a pair of PF and PO is selected from multiple candidate paging occasions based on a preset policy. Exemplarily, the preset policy may include selecting a maximum PO, a minimum PO, a maximum PF, or a minimum PF. It should be understood that the above examples are provided for convenience of understanding of the present application, and the present application does not limit how the paging occasion is determined from the candidate paging occasions.

In the paging method provided in the present embodiment, multiple candidate paging occasions are determined using multiple identification identities, and one paging occasion is then determined from the multiple candidate paging occasions. A terminal does not need to monitor the paging messages at the candidate paging occasions corresponding to each identification identity, but only needs to monitor the paging message at a single paging occasion, which reduces the number of monitors by the UE within a paging cycle and saves the power of the terminal.

The reference terminal identity is one of the multiple identification identities and is used to calculate the paging occasion. Exemplarily, the AMF, SMF, and LMF assign the 5G-S-TMSI$_{AMF}$, 5G-S-TMSI$_{SMF}$, and 5G-S-TMSISI$_{LMF}$ to the UE, respectively. The 5G-S-TMSI$_{SMF}$ is used as the reference terminal identity, and the UE calculates the paging occasion based on the 5G-S-TMSI$_{SMF}$.

Taking the 5G-S-TMSI$_{LMF}$ being the reference terminal identity as an example, the formulas for calculating the PF is as follows:

$$\text{PF: } (SFN+PF\_offset) \bmod T = (T \text{ div } N)*(UE\_ID \bmod N);$$

The formula for calculating the PO is as follows:

$$\text{PO: } i\_s = floor(UE\_ID/N) \bmod Ns;$$

where UE_ID is 5G-S-TMSI$_{LMF}$ mod 1024.

Paging occasions PF$_{LMF}$ and PO$_{LMF}$ are calculated.

In an embodiment, the reference terminal identity is pre-agreed;

the reference terminal identity is determined through negotiation between the terminal and the access network device;

the reference terminal identity is determined through negotiation between the terminal and the core network;

the reference terminal identity is received by the terminal from the access network device; or

the reference terminal identity is received by the terminal from the core network.

In an embodiment, in case that the reference terminal identity is pre-agreed, for example, through a protocol, the UE and the network side (RAN or core network) agree a 5G-S-TMSI assigned by which type of NF to use as the reference terminal identity, that is, determining which of multiple identification identities as the reference terminal identity.

In an embodiment, the reference terminal identity is determined by the UE and a network based on the same pre-agreed preset policy.

Exemplarily, the UE and the network calculate candidate paging occasions based on each of identification identities, respectively;

the UE and the network determine the paging occasion from the candidate paging occasions based on a preset policy (e.g., minimum PO).

In this embodiment, the UE and the network, such as the core network, may determine the same reference terminal identity without interaction. This allows the UE and RAN to calculate the same and unique paging occasion, saving the power of the terminal and ensuring execution of paging.

For the case that the reference terminal identity is determined through negotiation between the terminal and the access network device, dynamic negotiation may be performed between the UE and the RAN in a connected state.

In an embodiment, the UE determines an identification identity assigned by which type of NF as the reference terminal identity and calculates the paging occasion based on the reference terminal identity. Simultaneously, the UE needs to send the reference 5G-S-TMSI to the RAN in a connected state, and the RAN then transmits the reference terminal identity to the core network.

Exemplarily, the UE calculates different PFs and POs based on the identification identify assigned by each NF. The UE then selects a pair of PF and PO from each pair of PF and PO based on a pre-set policy (such as the maximum or minimum PO) as the final UE paging occasion. The UE also notifies the RAN and core network of the identification identify (i.e., the reference terminal identity) corresponding to the PO value and the paging cycle (T) negotiated between the UE and a NF (a NF that assigned the reference terminal identity) while the UE is in the connected state.

Alternatively, while the UE is in a connected state, the RAN to which the UE is connected transmits the reference terminal identity to the core network.

In an embodiment, the core network determines an identification identity assigned by which type of NF as the reference terminal identity and notifies the UE of the reference terminal identity.

In an embodiment, the NF in the core network carries the reference terminal identity when initiating a paging, and calculates the paging occasion, and the UE needs to transmit the reference 5G-S-TMSI to the RAN while in a connected state.

In an embodiment, the RAN determines an identification identity assigned by which type of NF as the reference terminal identity and notifies the UE and the core network (NF in the core network) of this reference terminal identity.

In an embodiment, the UE may transmit the identification identity determined by the UE to the RAN while in a connected state. Upon receiving the identification identity transmitted from the UE, the RAN may determine whether to use the identification identity as the reference terminal identity. If determining the identification identity as the reference terminal identity, the RAN may transmit a response message to the UE confirming that the identification identity is used as the reference terminal identity. Alternatively, the RAN may choose not to transmit a response message and use the identification identity as the reference terminal identity by default. If not determining the identification identity as the reference terminal identity, the RAN may select a new identification identity as the reference terminal identity and transmit the reference terminal identity selected by the RAN to the UE and the core network. The above is an example of a case where the UE determines the reference terminal identity. For cases where the RAN determines the reference terminal identity and the core network determines the reference terminal identity, reference may be made to the above examples and is not further repeated here.

For the case that the reference terminal identity is received by the terminal from the access network device or from the core network (i.e., the reference terminal identity is received by the terminal from the access network device or the core network), the reference terminal identity may be determined through negotiation between the RAN and the core network. After the reference terminal identity is determined on the network side, the RAN or core network notifies the UE of the reference terminal identity. In other words, the UE receives the reference terminal identity from the RAN or core network, and the UE does not participate in the negotiation of the reference terminal identity.

It should be understood that the above is an example for the convenience of understanding the present application and should not limit the present application.

For a universal terminal identity, multiple NFs in the core network use a universal terminal identity to identify the UE. The universal terminal identity may be generated based on multiple identification identities.

In an embodiment, the structure of the 5G short-temporary mobile subscriber identity (5G-S-TMSI) is restructured and extended. To facilitate the introduction of the embodiments of the present application, the resulting universal terminal identity may be referred simply to as the 5G-S-TMSI'. A length and a position of an identification identity assigned by each NF to the UE in the 5G-S-TMSI' may be predefined. After each NF assigns a corresponding identity to the UE, a complete 5G-S-TMSI' is generated. In an embodiment, in case that the terminal identity is a universal terminal identity, since the identification identities assigned by each NF to the UE are combined to form the universal terminal identity, the length of the universal terminal identity is significantly longer than the length of the 5G-S-TMSI in the related art. Therefore, the formulas for calculating the PF and PO may be adaptively modified. The UE_ID value is modified to UE_ID=5G-S-TMSI' mod (1024*7).

Taking 5G-S-TMSI' being the universal terminal identity as an example, the formula for calculating the PF is as follows:

$$\text{PF: } (SFN+PF\_offset) \bmod T = (T \text{ div } N)*(UE\_ID \bmod N);$$

The formula for calculating the PO is as follows:

$$\text{PO: } i\_s = floor(UE\_ID/N) \bmod Ns;$$

where UE_ID is 5G-S-TMSI' mod (1024*7).

Paging occasions PF and PO are calculated.

In the paging method provided in the present embodiment, in case that the first terminal identity is a universal terminal identity or a reference terminal identity, since there is only one first terminal identity, the terminal calculates the paging occasion based on the universal terminal identity or the reference terminal identity and may determine a single paging occasion. A terminal does not need to monitor the paging message at the candidate paging occasions corresponding to each identification identity, but only needs to monitor the paging message at a single paging occasion, which reduces the number of monitors by the UE within a paging cycle and saves the power of the terminal.

It should be understood that the above is an example for the convenience of understanding the present application and should not limit the present application.

In an embodiment, the method further includes:

transmitting an identification identity corresponding to the paging occasion and/or a paging cycle corresponding to the paging occasion to an access network device.

In an embodiment, the UE in a connected state may notify the RAN of the $5G\text{-}S\text{-}TMSI_{NF}$ corresponding to the determined paging occasion. The RAN may determine the identification identity corresponding to the paging occasion as a reference terminal identity and transmit the reference terminal identity to the core network.

In an embodiment, the UE in a connected state may notify the RAN of the paging cycle corresponding to the determined paging occasion. The paging cycle may be a paging cycle negotiated between the UE and the NF that assigned the $5G\text{-}S\text{-}TMSI_{NF}$ and the RAN transmits the paging cycle to the core network.

In an embodiment, when the NF in the core network triggers the paging, the identification identity corresponding to the paging occasion determined by the UE and/or the paging cycle corresponding to the paging occasion is carried in the paging message.

Exemplarily, the UE selects the $PF_{SMF}$ and $PO_{SMF}$ as the paging occasion. The UE in a connected state transmits the $5G\text{-}S\text{-}TMSI_{NF}$ to the RAN and the paging cycle $T_{SMF}$ to the RAN. The $T_{SMF}$ is pre-negotiated between the UE and the SMF.

In the paging method provided by the embodiments of the present application, the UE synchronizes the identification identity and/or paging cycle corresponding to the paging occasion with the RAN. The RAN then transmits the identification identity and/or paging cycle corresponding to the paging occasion to the core network. The core network carries the reference terminal identity and/or paging cycle when triggering the paging, which enables the UE and RAN to perform the paging procedure at the same paging occasion, ensuring the normal performance of the paging procedure.

A method for determining the paging cycle is introduced below.

In an embodiment, the UE may use a default paging cycle broadcast by the RAN through a system message.

In an embodiment, the access network may also notify the terminal of a specific paging cycle on the access network side via a connection release message.

In an embodiment, the UE may negotiate with the core network to obtain a UE-dedicated paging cycle based on its needs.

Before transmitting an NG interface paging message to the access network, the core network first checks whether a valid dedicated paging cycle configuration for the paged UE is stored on the core network. If the corresponding configuration exists, the core network adds the field to the NG interface paging message. The core network then notifies the access network of the dedicated paging cycle configuration for the paged UE via the NG interface paging message.

When the UE negotiates a dedicated paging cycle with the core network based on its needs, the UE must negotiate a same paging cycle with the NF for each service type. This ensures that the UE calculates the paging occasion PF and PO using a unified paging cycle T.

In an embodiment, the method further includes:

negotiating a paging cycle with each of the multiple network functions; or

negotiating a paging cycle with a target network function, where the target network function is one of the multiple network functions;

where the paging cycle is used to determine the paging occasion.

For negotiating the paging cycle with each of the multiple network functions,

in an embodiment, the UE negotiates paging cycle with the NFs of various service types, such as negotiates a paging cycle $T_{AMF}$ with the AMF, a paging cycle $T_{SMF}$ with the SMF, and a paging cycle $T_{LMF}$ with the LMF; or

in an embodiment, the UE notifies each NF of the paging cycle via a NAS message. If the NF accepts the paging cycle, the paging cycle is carried when paging is initiated.

If one or more NFs disagree with the paging cycle, the NF returns a new paging cycle to the UE via a NAS message. Upon receiving multiple paging cycles, the UE selects a paging cycle, such as the one with the smallest paging cycle value, as the paging cycle for the UE.

Alternatively, the UE notifies the NF of the paging cycle selected by the UE. For example, the UE selects a paging cycle with the smallest paging cycle value as the paging cycle for the UE.

In an embodiment, the UE no longer notifies the NF that the paging cycle with the smallest paging cycle value is selected as the paging cycle of the UE. When the RAN receives a paging request from the NF using the new paging cycle, if the new paging cycle is inconsistent with the stored paging cycle for the UE, the RAN uses the same rules as the UE to select the paging cycle with a smaller value as the paging cycle for the UE.

For negotiating the paging cycle with the target network function, the UE may negotiate with the target NF, and the target NF may synchronize the paging cycle T to other NFs.

In an embodiment, the UE may negotiate the paging cycle with the AMF. The negotiation method is described in related art and is not repeated here.

In an embodiment, after determining the paging cycle discontinuous reception (DRX) parameters, the AMF may notify the serving NF of the paging cycle DRX parameters for the UE in subsequent procedures. Alternatively, the AMF stores the paging cycle DRX parameters for the UE in a unified data management function (UDM), a unified data repository function (UDR), or a network NF repository function (NRF), and the NF obtains the parameters from the UDM, UDR, or NRF.

It should be understood that the above is an example for the convenience of understanding the present application and should not limit the present application. Alternatively, the paging cycle selection rule may also be selecting the maximum paging cycle as the paging cycle for the UE.

In the paging method provided in the embodiments of the present application, the UE is ensured to use a unified paging cycle to calculate the paging occasion.

In an embodiment, the method further includes:
in case that the paging message is received, determining, based on paging identity information carried in the paging message, a network function that triggers a paging.

In an embodiment, in a RAN service-oriented scenario, the UE may receive paging messages initiated by multiple NFs. The UE may determine which service type network function triggers the paging message based on the paging identity information carried in the paging message. The paging identity information is used to determine the network function that triggers the paging.

In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

In an embodiment, when the first terminal identity is a universal terminal identity, the paging identity information may be paging indication information, and the paging indication information may indicate a position of the identification identity assigned to the terminal by the network function that triggers the paging in the universal terminal identity.

Exemplarily, the universal terminal identity consists of $5G\text{-}S\text{-}TMSI_{AMF}$, $5G\text{-}S\text{-}TMSI_{SMF}$, and $5G\text{-}S\text{-}TMSI_{LMF}$. 0 is used as a position index of the $5G\text{-}S\text{-}TMSI_{AMF}$, 1 is used as a position index of the $5G\text{-}S\text{-}TMSI_{SMF}$, and 2 is used as a position index of the $5G\text{-}S\text{-}TMSI_{LMF}$. A value of the paging indication information indicates the position index of the identification identity assigned to the terminal by the network function that triggers the paging. If the value of the paging indication information is 2, it indicates that the identification identity assigned to the terminal by the network function that triggers the paging is $5G\text{-}S\text{-}TMSI_{LMF}$ with position index 2. The UE may determine that the network function that triggers the paging is the LMF based on the mapping relationship between the $5G\text{-}S\text{-}TMSI_{LMF}$ and the LMF.

For the first identification identity, based on the mapping relationship between the identification identity and the network function (such as the association between the identification identity and the network function that assigned the identification identity), the UE may determine the network function associated with the first identification identity, to determine the network function that triggers the paging.

Exemplarily, the paging message received by the UE carries a first identification identity, $5G\text{-}S\text{-}TMSI_{SMF}$. The UE may determine that the network function that triggers the paging is the SMF based on the network function associated with the $5G\text{-}S\text{-}TMSI_{SMF}$.

In the paging method provided in the embodiment of the present application, the UE may determine the network function that triggers paging based on the paging identification information carried in the paging message. This enables, in RAN service-oriented scenarios, the UE to monitor paging messages from different NFs at the paging occasion and determine which NF the paging message comes from.

In an embodiment, the method further includes:
transmitting a service request message to an access network device, where the service request message is used to initiate a service request to the network function that triggers the paging.

In the paging method provided in the embodiment of the present application, a problem that how a UE monitors paging requests from different NFs in RAN service-oriented scenario is solved, and a problem that how a UE determines the NF that triggers the paging is further solved, ensuring that the UE may perform the paging procedure and initiate a service request to the NF that triggers the paging based on the received paging message.

FIG. 5 is a second schematic flowchart of a paging method according to an embodiment of the present application. As shown in FIG. 5, an embodiment of the present application provides a paging method, performed by an access network device, including:

step 510, receiving a paging message transmitted from a core network, where the paging message carries a second terminal identity.

In an embodiment, when initiating a paging, the NF carries the second terminal identity in the paging message, where the second terminal identity is associated with multiple network functions of the core network.

The second terminal identity being associated with multiple network functions (NFs) of the core network may mean that the second terminal identity is jointly assigned to the terminal by multiple NFs of the core network, or is assigned to the terminal by one NF and then shared with multiple NFs, or is independently assigned to the terminal by multiple NFs, or is one of the second terminal identities independently assigned to the terminal by multiple NFs, or is determined based on identities independently assigned to the terminal by multiple NFs, or multiple NFs participate in the assignment, generation, transmission, and selection of the second terminal identity. It should be understood that the above is an example for the convenience of understanding the present application and should not limit the present application.

Step 520, determining a paging occasion based on the second terminal identity.

It should be understood that the paging occasion determined by the RAN based on the second terminal identity is the same as the paging occasion determined by the terminal. The number of paging occasions in each paging cycle is one.

Step 530, transmitting the paging message to the terminal at the paging occasion.

In the paging method provided by embodiments of the present application, the RAN determines the paging occasion based on the second terminal identity carried in the paging message, enabling the RAN to determine the paging occasion in RAN service-oriented scenarios and transmit paging messages from different NFs to the UE at the paging occasion. In an embodiment, the terminal is in an idle state (IDLE).

In the paging method provided by embodiments of the present application, the RAN determines the paging occasion based on the first terminal identity to enable a terminal to determine the paging occasion and monitor the paging messages from different NFs at the paging occasion in the RAN service-oriented scenario.

In an embodiment, the second terminal identity is any of following:

a universal terminal identity, where the universal terminal identity is used by the core network to identify the terminal, the universal terminal identity is composed of multiple identification identities, each of the multiple identification identities is assigned to the terminal by a corresponding network function and used by the corresponding network function to identify the terminal; or

a reference terminal identity, where the reference terminal identity is one of multiple identification identities.

In an embodiment, for the introduction to the universal terminal identity and the reference terminal identity, reference may be made to above and is not repeated here.

In the paging method provided in the embodiment of the present application, in case that the second terminal identity is a universal terminal identity or a reference terminal identity, since only one terminal identity is included in the second terminal identity, the RAN may calculate the paging occasion based on the second terminal identity and may determine a single paging occasion within each paging cycle. The RAN transmits the paging message to the UE at the paging occasion. The terminal does not need to monitor the paging message at the candidate paging occasions corresponding to each identification identity, but only needs to monitor the paging message at a single paging occasion, which reduces the number of monitors by the UE within a paging cycle and saves the power of the terminal.

In an embodiment, the reference terminal identity is pre-agreed;

the reference terminal identity is determined through negotiation between the access network device and the terminal; or

the reference terminal identity is determined through negotiation between the access network device and the core network.

In an embodiment, for the introduction to the reference terminal identity, reference may be made to above and is not repeated here.

In an embodiment, after the access network device and the terminal determine the reference terminal identity through negotiation, the access network device or the terminal may notify the core network of the reference terminal identity, for example, the access network device or the terminal transmits the reference terminal identity to the core network.

In an embodiment, after the access network device and the core network determine the reference terminal identity through negotiation, the access network device or the core network may notify the terminal of the reference terminal identity, for example, the access network device or the core network transmits the reference terminal identity to the terminal.

In an embodiment, the method further includes:

receiving a service request message transmitted from the terminal, where the service request message is used to initiate a service request to a network function that triggers a paging; and

transmitting the service request message to the network function that triggers the paging.

In an embodiment, the service request message transmitted from the terminal carries paging identity information. The RAN determines the network function that triggers the paging based on the paging identity information and transmits the service request message to the network function that triggers the paging. For the introduction to the paging identity information, reference may be made above and is not repeated here.

In the paging method provided in the embodiment of the present application, a problem that how the RAN determines the paging occasion is solved, ensuring that both the UE and RAN perform the paging procedure and initiate a service request to the NF that triggers the paging based on the received paging message.

FIG. 6 is a third schematic flowchart of a paging method according to an embodiment of the present application. As shown in FIG. 6, an embodiment of the present application provides a paging method, performed by a network function, including:

step 610, transmitting a paging message to an access network device, where the paging message carries a second terminal identity;

where the second terminal identity is associated with multiple network functions of the core network and is used by the access network device to determine a paging occasion.

In an embodiment, for the introduction to the second terminal identity, reference may be made above and is not repeated here.

In the paging method provided by embodiments of the present application, by transmitting a paging message carrying a second terminal identity to a RAN via a NF, the RAN may determine a paging occasion based on the second terminal identity carried in the paging message, enabling the RAN to determine the paging occasion in RAN service-oriented scenarios and transmit paging messages from different NFs to the UE at the paging occasion.

In an embodiment, the second terminal identity is any of following:

a universal terminal identity, where the universal terminal identity is used by the core network to identify the terminal, the universal terminal identity is composed of multiple identification identities, each of the multiple identification is assigned to the terminal by a corresponding network function and used by the corresponding network function to identify the terminal; or

a reference terminal identity, where the reference terminal identity is one of multiple identification identities.

In an embodiment, the reference terminal identity is pre-agreed;

the reference terminal identity is determined through negotiation between the network function and the terminal;

the reference terminal identity is determined through negotiation between the network function and the access network device;

the reference terminal identity is received by the network function from the terminal, or

the reference terminal identity is received by the network function from the access network device.

In an embodiment, for the introduction to the reference terminal identity, reference may be made to above and is not repeated here.

For a case that the reference terminal identity is pre-agreed;

in an embodiment, through a protocol, the UE and the core network agree a 5G-S-TMSI assigned by which service type of NF to use as the reference terminal identity; or

in an embodiment, the reference terminal identity is determined by the UE and a network (e.g., the core network) based on the same pre-agreed preset policy.

One or more NFs in the core network may determine the reference terminal identity using the following method of:

calculating candidate paging occasions based on the multiple identification identities, respectively; and

determining the paging occasion from the candidate paging occasion;

where each of the multiple identification identities is pre-received, for example, transmitted from the core network.

In an embodiment, the NF may receive all identification identities of the UE. The method for the NF to calculate candidate paging occasions based on each of the identification identities is the same as the method for the UE to calculate candidate paging occasions based on each of the identification identities and is not repeated here.

The NF determines the paging occasion from the candidate paging occasions, the NF and the UE use the same preset policy to select a pair of PF and PO from multiple candidate paging occasions as the paging occasion. For introduction of the preset policy, reference is made above and not repeated here.

For the case that the reference terminal identity is received by the network function from the terminal or from the access network device (i.e., the reference terminal identity is received by the network function from the terminal; or the reference terminal identity is received by the network function from the access network device), the RAN and the UE may determine the reference terminal identity through negotiation. After the RAN and the UE determine the reference terminal identity, the RAN or the UE notifies the core network. The core network does not participate in the negotiation of the reference terminal identity.

A method for synchronizing reference terminal identities between NFs is introduced below.

When an NF in the core network determines a reference terminal identity (which may be received from the UE, the RAN, or determined independently), the NF must synchronize the same reference terminal identity with NFs of other service type. This ensures that when NFs in the core network trigger a paging, the reference terminal identity carried in the paging message is the same, and that the RAN calculates the PF and PO using a unified reference terminal identity.

Exemplarily, the UE negotiates the same reference terminal identity with each serving NF.

The UE notifies each NF of its determined reference terminal identity via a NAS message. If the NF accepts the reference terminal identity, the NF carries the reference terminal identity when initiating paging.

If one or more NFs disagree with the reference terminal identity, the NF returns a new reference terminal identity to the UE via a NAS message. If the UE receives multiple reference terminal identities, the UE selects one as the final reference terminal identity based on a policy.

In the paging method provided in the present embodiment, in case that the second terminal identity is a universal terminal identity or a reference terminal identity, since only one terminal identity is included in the second terminal identity, the RAN may calculate the paging occasion based on the second terminal identity and may determine a single paging occasion within each paging cycle. The RAN transmits the paging message to the UE at the paging occasion. The terminal does not need to monitor the paging message at the candidate paging occasions corresponding to each identification identity, but only needs to monitor the paging message at a single paging occasion, which reduces the number of monitors by the UE within a paging cycle and saves the power of the terminal.

In an embodiment, in case that the second terminal identity is the universal terminal identity, before transmitting the paging message to the access network device, the method further includes:

receiving the universal terminal identity synchronized by other network functions; or

determining the universal terminal identity based on the multiple identification identities, synchronizing the universal terminal identity with other network functions, and transmitting the universal terminal identity to the terminal.

In an embodiment, receiving the universal terminal identity synchronized by other NFs means that the other NFs determine the universal terminal identity and synchronize the determined universal terminal identity. A method for determining the universal terminal identity by the other NFs is introduced below. For determining the universal terminal identity based on the multiple identification identities, other network functions synchronize the universal terminal identity, and transmit the universal terminal identity to the terminal;

the NF may determine the universal terminal identity based on multiple identification identities, where each of the multiple identification identities is assigned to the terminal by a corresponding network function and used by the corresponding network function to identify the terminal.

In an embodiment, the universal terminal identity may be composed of multiple identification identities.

To facilitate the introduction of the embodiments of the present application, the network function that generates the universal terminal identity is referred to as a first network function, or referred simply to as the first NF.

In an embodiment, determining the universal terminal identity includes:

receiving, by the first NF, an identification identity 5G-S-TMSI$_{NF}$ assigned to the UE by other NFs;

combining, by the first NF, the identification identities 5G-S-TMSI$_{NF}$ assigned to the UE by other NFs to obtain the universal terminal identity; and

managing, by the first NF, the universal terminal identity.

In an embodiment, determining the universal terminal identity includes:

generating, by the first NF, the universal terminal identity and dividing the length and position occupied by each NF in the universal terminal identity, i.e., dividing the identification identity corresponding to each NF in the universal terminal identity; and

transmitting, by the first NF, the universal terminal identity and the length and position corresponding to each identification identity to each NF.

In an embodiment, the first NF may be one of the NFs requiring NAS interaction with the UE, or a UDM, a UDR, or an NRF.

In an embodiment, the paging message further carries paging identity information, where the paging identity information is used to indicate a network function that triggers a paging to the terminal.

In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

In an embodiment, for the introduction to the paging identity information, the paging indication information and the identification identity, reference may be made above and are not repeated here.

In an embodiment, the first identification identity may be transmitted via the NAS, and the RAN only forwards the first identification identity to the UE without interpreting the first identification identity.

In an embodiment, before transmitting the paging message to the access network device, the method further includes:

negotiating a paging cycle with the terminal;

negotiating a paging cycle with the terminal and synchronizing the paging cycle with other network functions; or

receiving a paging cycle synchronized by other network functions.

In an embodiment, for negotiating the paging cycle with the terminal, the UE notifies each NF of its dedicated paging cycle via a NAS message. If the NF accepts the paging cycle, the paging cycle is carried when paging is initiated. If the NF disagrees with the paging cycle, the NF returns a new paging cycle to the UE via a NAS message.

In an embodiment, after negotiating a paging cycle with the terminal, the NF synchronizes the paging cycle with other NFs.

For receiving paging cycles synchronized by other network functions, the NF does not participate in paging cycle negotiation with the UE and directly receives the paging cycle synchronized by other NFs.

In an embodiment, the method further includes:
receiving a service request message transmitted from the access network device.

In the paging method provided in the embodiment of the present application, a paging message is transmitted to an access network device and a service request message transmitted from the access network device is received. The service request message is sourced from the terminal, thereby completing the paging procedure in a RAN service-oriented scenario.

The present application is described below with reference to multiple embodiments.

Embodiment 1: Case that the terminal identity is a universal terminal identity.

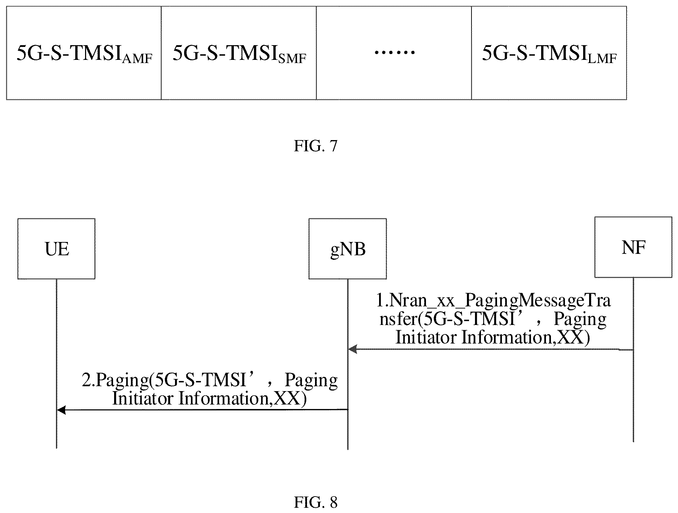

The 5G-S-TMSI structure is restructured and extended to obtain a universal terminal identity, which is represented by 5G-S-TMSI'. A length and a position of an identification identity assigned by each NF to the UE in the 5G-S-TMSI' are defined. FIG. 7 is a schematic structural diagram of a universal terminal identity according to an embodiment of the present application. As shown in FIG. 7, after each NF assigns a corresponding identity to the UE, the complete 5G-S-TMSI' is generated.

In an embodiment, if the UE negotiates a paging cycle with the core network, it should negotiate a same paging cycle with each NF in the core network. The UE and RAN calculate the paging occasion based on the 5G-S-TMSI'.

It should be understood that since the RAN calculates the paging occasion PF and PO in real time, in order to maintain consistency between the paging occasions for UE and RAN, both the UE and RAN calculate the PF and PO based on the complete 5G-S-TMSI'. The NF must also carry the complete 5G-S-TMSI' in a paging message when transmitting the paging message to the UE.

In an embodiment, to assist the UE in identifying the NF that triggers the paging message, paging indication information needs further to be added to indicate the position and length of the identification identity assigned by the NF that triggers the paging message within the 5G-S-TMSI'. In an embodiment, the paging indication information may be indicated via information elements (IEs).

For example, the 5G-S-TMSI' consists of seven $5G\text{-}S\text{-}TMSI_{NF}$, with their positions represented by 0 to 6 respectively (assuming that the lengths of each $5G\text{-}S\text{-}TMSI_{NF}$ are equal). If the value of the IE (paging indication information) is 1, an initiator of the paging message may be determined to be the SMF based on the universal terminal identification structure shown in FIG. 7.

FIG. 8 is a fourth schematic flowchart of a paging method according to an embodiment of the present application. As shown in FIG. 8, a paging method according to an embodiment of the present application includes the following steps.

At step 1, an NF initiates a paging and transmits a paging message Nran_xx_PagingMessageTransfer to the gNB (an access network device). The paging message carries the 5G-S-TMSI' and paging indication information. The paging indication information is hereinafter referred to as paging initiator information. When receiving the paging message from the NF, the gNB calculates PF and PO based on the 5G-S-TMSI' and transmits the 5G-S-TMSI' and paging initiator information along with the paging message to the UE.

In an embodiment, the paging cycle T may be determined based on the method described above and is not further repeated here.

At step 2, the UE also calculates the PF and PO based on the 5G-S-TMSI'. After receiving the paging message, the UE determines whether the paging message was triggered by the core network based on the 5G-S-TMSI' in the paging message and determines which service type of NF triggers the paging message based on the paging initiator information. The UE then initiates a service request procedure to the corresponding NF.

In an embodiment, the characteristics of the universal terminal identity are the same as those of the 5G-S-TMSI in related art.

It should be understood that the above examples are provided to facilitate understanding of the present application. The present application does not limit the specific structure of the universal terminal identity. The present application does not specify the order or length of the identification identities $5G\text{-}S\text{-}TMSI_{NF}$ assigned by each NF in the universal terminal identity 5G-S-TMSI'. This patent is merely an example.

After an NF of each service type assigns a 5G-S-TMSINF to a UE, the NF must generate a complete 5G-S-TMSI'. This 5G-S-TMSI' must be generated by a dedicated NF and synchronized to the corresponding NF. The NF of each service type represents a NF that requires NAS interaction with the UE. A method for generating the universal terminal identity is introduced below.

Embodiment 2: Each NF assigns a $5G\text{-}S\text{-}TMSI_{NF}$ to the UE, and the first NF combines and manages the universal terminal identity 5G-S-TMSI'.

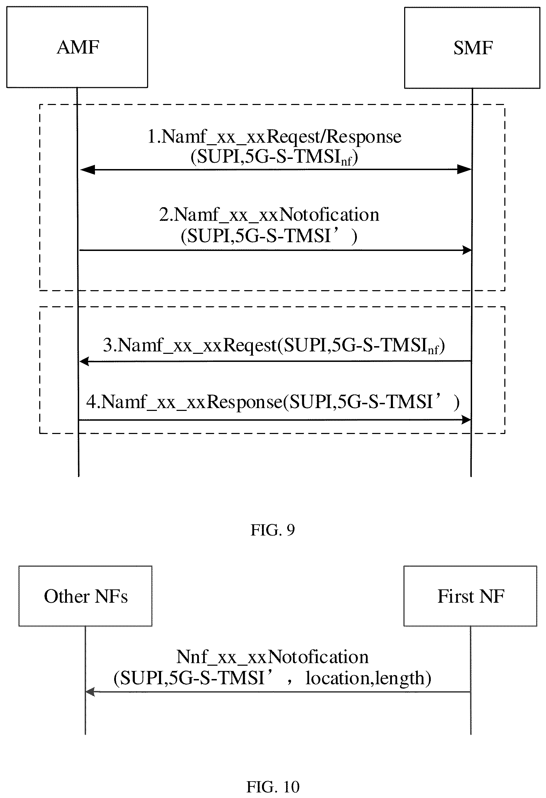

FIG. 9 is a first schematic flowchart of a method for generating a universal terminal identity according to an embodiment of the present application. As shown in FIG. 9, description is made taking the AMF as the NF (the first NF) that combines and manages the 5G-S-TMSI' as an example.

Case 1: $5G\text{-}S\text{-}TMSI_{SMF}$ is not a last UE identity received by the AMF.

At step 1, after assigning the $5G\text{-}S\text{-}TMSI_{SMF}$ to the UE, the SMF transmits the $5G\text{-}S\text{-}TMSI_{SMF}$ to the AMF. For example, the SMF transmits a request message (Namf_xx_xxReqest) to the AMF. The message carries the identity of the terminal (identification identity), such as a subscription permanent identifier (SUPI), and the identification identity $5G\text{-}S\text{-}TMSI_{NF}$, which in the embodiment is the $5G\text{-}S\text{-}TMSI_{SMF}$.

At step 2, if the AMF has not received a $5G\text{-}S\text{-}TMSI_{NF}$ assigned by other NFs, the AMF returns a successfully-received response message (Namf_xx_xxResponse) to the SMF. After receiving the $5G\text{-}S\text{-}TMSI_{NF}$ assigned by all NFs, the AMF generates a 5G-S-TMSI' and notifies the SMF of the 5G-S-TMSI'. For example, the AMF transmits a notification message (Namf_xx_xxNotification) to the SMF, and the notification message carries the SUPI of the terminal and the universal terminal identity 5G-S-TMSI'.

Case 2: 5G-S-TMSI$_{SMF}$ is a last UE identity received by the AMF.

At step 3, after assigning a 5G-S-TMSI$_{SMF}$ to the UE, the SMF transmits the 5G-S-TMSI$_{SMF}$ to the AMF. For example, the SMF transmits a request message (Namf_xx_xxReqest) to the AMF. The message carries the identity of the terminal such as the SUPI, and the identification identity 5G-S-TMSI$_{NF}$, which in the embodiment is the 5G-S-TMSI$_{SMF}$.

At step 4, if the 5G-S-TMSI$_{SMF}$ is the last UE identity received by the AMF, the AMF generates a 5G-S-TMSI' and transmits a Namf_xx_xxResponse response message carrying the universal terminal identity 5G-S-TMSI' and SUPI to the SMF.

In an embodiment, all 5G-S-TMSI$_{NFs}$ are different.

In an embodiment, when the 5G-S-TMSI' is transmitted, the location and length of the 5G-S-TMSI$_{NFs}$ may also be transmitted to the NF.

It should be understood that the above examples are based on the AMF and SMF only. Other NFs may refer to the examples for AMF and SMF and is not further repeated here.

Embodiment 3: The First NF uniformly generates a universal terminal identity 5G-S-TMSI'.

FIG. 10 is a second schematic flowchart of a method for generating a universal terminal identity according to an embodiment of the present application. As shown in FIG. 10, the first NF generates the universal terminal identity 5G-S-TMSI' and transmits a notification message to other NFs. The notification message carries the universal terminal identity 5G-S-TMSI'. In an embodiment, the notification message may further carry at least one of the following: SUPI of the terminal, location information of the NF-associated identification identity 5G-S-TMSI$_{NF}$ within the universal terminal identity 5G-S-TMSI', or length information of the NF-associated identification identity 5G-S-TMSI$_{NF}$ within the universal terminal identity 5G-S-TMSI'.

Alternatively, the first NF may be a UDM, UDR, NRF, or an NF requiring NAS interaction with the UE.

In embodiment 3, it is not necessary for each NF to assign a 5G-S-TMSI$_{NF}$ to the UE. Instead, the first NF generates the 5G-S-TMSI' and divides the length and position occupied by each NF within the 5G-S-TMSI'. Afterwards, the NF or UDM/UDR/NRF notifies the NF of the 5G-S-TMSI' and the length and location of each 5G-S-TMSI$_{NF}$ within the 5G-S-TMSI'.

An improvement to the formula for calculating the paging occasion for a universal terminal identity is described below.

Embodiment 4: formula for calculating a paging occasion

Based on the method described in embodiment 1, since the 5G-S-TMSI$_{NFs}$ assigned by each NF to the UE are combined to form the universal terminal identity 5G-S-TMSI', the length of the universal terminal identity 5G-S-TMSI' is significantly longer than the 5G-S-TMSI' in the related art. Therefore, the formulas for calculating the PF and PO need to be modified. The UE_ID value is modified to:

$$UE\_ID = 5G\text{-}S\text{-}TMSI' \bmod (1024 * 7).$$

Embodiment 5: a case where the terminal calculates the paging occasion based on the reference terminal identity and the RAN calculates the paging occasion based on the first identification identity

When serving a UE, each service type of NF assigns a 5G-S-TMSI$_{NF}$ to the UE. When initiating paging, the NF may carry the 5G-S-TMSI$_{NF}$ as paging identity information. An identification identity assigned to the UE by the NF that triggers the paging is a first identification identity. In an embodiment, the first identification identity may be transmitted between the RAN and the core network through the NAS. The RAN only forwards the first identification identity to the UE and does not interpret the first identification identity.

When initiating paging to the UE, the NF carries the reference terminal identity in an N2 message. The reference terminal identity is referred to as B-5G-S-TMSI below.

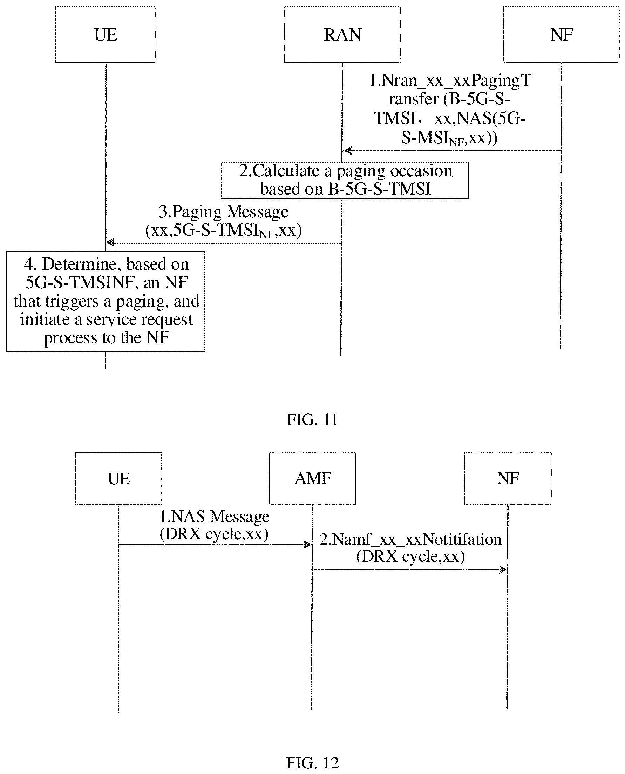

Exemplarily, FIG. 11 is a fifth schematic flowchart of a paging method according to an embodiment of the present application. As shown in FIG. 11, calculating the paging occasion based on the reference terminal identity B-5G-S-TMSI in the embodiment of the present application, includes:

step 1, carrying the B-5G-S-TMSI and paging parameters in a paging message Nran_xx_xxPagingTransfer transmitted by the NF to the RAN,

step 2, calculating, by the RAN, the paging transmission time PF and PO based on the B-5G-S-TMSI and paging parameters in the Nran_xx_xxPagingTransfer message, where it should be understood that for the RAN, the paging occasion is the paging transmission time,

step 3, transmitting, by the RAN, a paging message carrying the first identification identity 5G-S-TMSINF to the UE, and

step 4, after receiving the paging message, determining, by the UE, the NF that triggers the paging based on the first the UE $5G\text{-}S\text{-}TMSI_{NF}$ in the paging message and initiates a service request procedure to that NF.

In the embodiments of the present application, both the UE in the IDLE state and the RAN (without an RRC connection established with the UE) use a reference terminal identity to calculate the paging occasions PF and PO.

In an embodiment, the UE and RAN negotiate the reference terminal identity in the connected state. Once an agreement is reached, the RAN transmits the reference terminal identity to the core network, and the reference terminal identity is synchronized among the NFs of the core network.

Embodiment 6: A reference terminal identity is determined.

When determining the reference terminal identity described in embodiment 5, the UE and RAN may use the following methods to maintain consistency in the calculated PF and PO.

Case 1: In a pre-agreed manner

Method 1: Agree through a protocol

Through a protocol, the UE and the RAN agree a 5G-S-TMSI assigned by which type of NF to use as the reference, that is, determining which of multiple identification identities as the reference terminal identity.

Method 2: The UE and the network each determine the reference 5G-S-TMSI based on the same policy.

In an embodiment, the reference terminal identity is determined by the UE and a network based on the same pre-agreed preset policy.

Exemplarily, the UE and the network calculates candidate paging occasions based on identification identities, respectively;

the UE and the network determine the paging occasion from the candidate paging occasions based on a preset policy (e.g., minimum PO).

In an embodiment, the UE calculates different paging occasions PF and PO based on the $5G\text{-}S\text{-}TMSI_{NF}$ assigned by each NF, determines each pair of PF and PO as a candidate paging occasion, and then selects a pair of PF and PO from all candidate paging occasions as a final paging occasion. It should be understood that for the method for determining a paging occasion based on a pair of PF and PO, reference may be made to related art and the method is not further repeated here.

Exemplarily, the AMF, SMF, and LMF assign $5G\text{-}S\text{-}TMSI_{AMF}$, $5G\text{-}S\text{-}TMSI_{SMF}$, and $5G\text{-}S\text{-}TMSI_{LMF}$ to the UE, respectively. Based on the $5G\text{-}S\text{-}TMSI_{AMF}$, $5G\text{-}S\text{-}TMSI_{SMF}$, and $5G\text{-}S\text{-}TMSI_{LMF}$, candidate paging occasions for the AMF are calculated: $PF_{AMF}$ and $PO_{AMF}$; candidate paging occasions for the SMF are calculated: $PF_{SMF}$ and $PO_{SMF}$; and candidate paging occasions for the LMF are calculated: $PF_{LMF}$ and $PO_{LMF}$. The terminal selects a pair of PF and PO from multiple candidate paging occasions as the paging occasion based on a preset policy.

Correspondingly, the network (e.g., the core network) may calculate candidate paging occasions based on each of the identification identities and determine the paging occasion among the candidate paging occasions.

The method for the network to calculate candidate paging occasions based on each of the identification identities is the same as the method for the UE to calculate candidate paging occasions based on each of the identification identities and is not repeated here.

For method for the network to determine the paging occasion from the candidate paging occasions, the RAN and the UE use the same preset policy to select a PF and PO pair from multiple candidate paging occasions as the paging occasion. For introduction of the preset policy, reference is made above and not repeated here.

In the embodiment, the UE and the network, such as the core network, may determine the same reference terminal identity without requiring interaction. This allows the UE and RAN to calculate the same and unique paging occasion, saving the power of the terminal and ensuring execution of paging.

Case 2: Dynamic Negotiation between the UE and the Network

Method 1: The UE determines the B-5G-S-TMSI.

The UE calculates different PFs and POs based on the identification identify assigned by each NF. The UE then selects a pair of PF and PO from various pairs of PF and PO based on a pre-set policy (such as the maximum or minimum PO) as the final UE paging occasion. The UE also notifies the RAN and core network of the identification identify corresponding to the PO value (i.e., the reference terminal identity) and the paging cycle (T) negotiated between the UE and an NF (an NF that assigned the reference terminal identity) while the UE is in the connected state.

Exemplarily, the UE determines the paging occasion using multiple identification identities and the RAN adopts the paging occasion determined by the UE.

When serving a UE, each service type of NF assigns a $5G\text{-}S\text{-}TMSI_{NF}$ to the UE. The NF uses this identity as the first identification identify when initiating paging.

The UE calculates different PFs and POs based on the identification identify 5G-S-TMSI$_{NF}$ assigned by each NF. The UE then selects a pair of PF and PO from various pairs of PF and PO based on a preset policy (such as the maximum or minimum PO) as the final UE paging occasion. It should be understood that the paging occasion for the UE is the paging reception time.

Furthermore, when the UE is connected, the UE uses the identification identify 5G-S-TMSI$_{NF}$ corresponding to the paging occasion selected based on the preset policy (such as the maximum PO value) as the reference terminal identity and notifies the NF in the core network of the reference terminal identity. The NF that triggers the paging message carries the reference terminal identity in the paging message.

Method 2: The RAN or the core network determines the B-5G-S-TMSI.

In an embodiment, the core network determines an identification identity assigned by which type of NF as the reference terminal identity and notifies the UE of this reference terminal identity.

In an embodiment, the NF in the core network carries the reference terminal identity when initiating a paging,

The method for the core network to determine the B-5G-S-TMSI is the same as the method for the UE to determine the B-5G-S-TMSI.

Exemplarily, the RAN to which the UE is connected in the connected state determines an identification identity assigned by which type of NF as the reference terminal identity and notifies the UE of the reference terminal identity, while also notifying the NF of the reference terminal identity.

In an embodiment, for the method for synchronizing reference terminal identity among the NFs, reference is made above and is not repeated here.

Embodiment 7: A paging cycle is synchronized.

When the UE negotiates a dedicated paging cycle with the core network based on its needs, the UE must negotiate the same paging cycle with each service type of NF. This ensures that the UE calculates the paging occasion PF and PO using a unified paging cycle T.

Case 1: The UE negotiates the same paging cycle with each serving NF.

The UE notifies each NF of the dedicated paging cycle via a NAS message. If the NF accepts the paging cycle, the paging cycle is carried when paging is initiated.

If one or more NFs disagree with the paging cycle, the NF returns a new paging cycle to the UE via a NAS message. Upon receiving multiple paging cycles, the UE selects a paging cycle with the smallest paging cycle value as the UE-dedicated paging cycle (the UE no longer notifies).

When the RAN receives a paging request from the NF using the new paging cycle, if it is inconsistent with the stored paging cycle for the UE, the RAN uses the same rules as the UE to select the smaller paging cycle as the UE-dedicated paging cycle.

Case 2: The UE negotiates with a certain NF, and the certain NF synchronizes the paging cycle T with other NFs.

The UE may notify the NF of the UE-dedicated paging cycle via an NAS message during the registration or mobility update procedure. In an embodiment, in RAN service-oriented scenarios, the registration or mobility update procedure may also be performed by the AMF. Therefore, the UE may negotiate the paging cycle with the AMF. The paging cycle negotiation method is described in related art and is not repeated here.

FIG. 12 is a first schematic flowchart of synchronization of a paging cycle according to an embodiment of the present application. As shown in FIG. 12, the UE transmits an NAS message to the AMF, where the NAS message carries a paging cycle DRX parameter (DRX cycle). After determining the paging cycle DRX parameter, the AMF may notify the serving NF of the paging cycle DRX parameter of the UE in subsequent procedures.

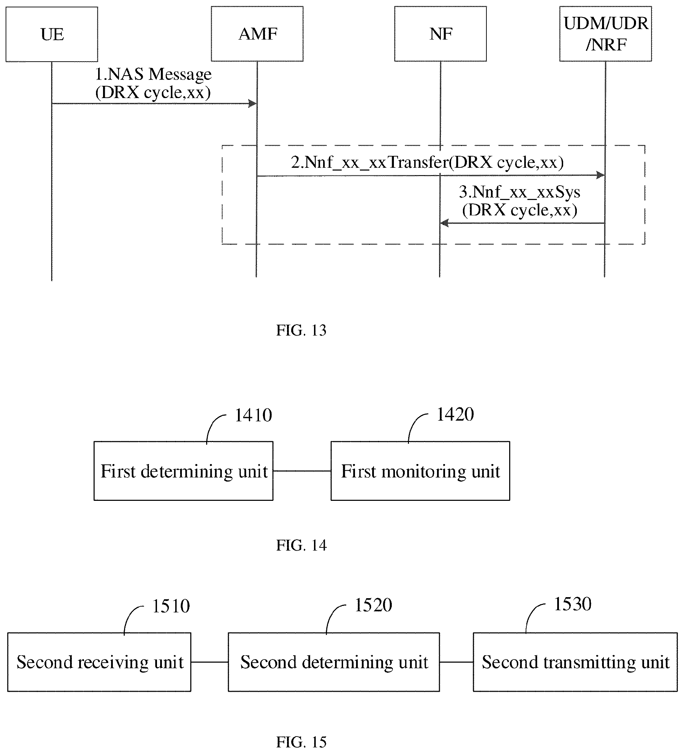

FIG. 13 is a second schematic flowchart of synchronization of a paging cycle according to an embodiment of the present application. As shown in FIG. 13, the UE transmits an NAS message to the AMF, where the NAS message carries a paging cycle DRX parameter (DRX cycle). After determining the paging cycle DRX parameter, the AMF stores the paging cycle DRX parameter of the UE in the UDM/UDR/NRF, and the NF obtains it from the UDM/UDR/NRF.

In the embodiment of the present application, the UE and the RAN are ensured to use a unified paging cycle T to calculate the paging occasion PF and PO.

Referring to FIG. 14, FIG. 14 is a first schematic structural diagram of a paging apparatus according to an embodiment of the present application. The paging apparatus according to the embodiment of the present application, for use in a terminal, includes:

a first determining unit 1410, used for determining a paging occasion based on a first terminal identity; and

a first monitoring unit 1420, used for monitoring a paging message at the paging occasion, where the paging message is triggered by a core network;

where the first terminal identity is associated with multiple network functions of the core network, and the first terminal identity is pre-received and used to identify the terminal.

In an embodiment, the first terminal identity is any of following:

multiple identification identities, where each of the multiple identification identities is assigned to the terminal by a corresponding network function and used by the corresponding network function to identify the terminal;

a universal terminal identity, where the universal terminal identity is used by the core network to identify the terminal, and composed of multiple identification identities; or

a reference terminal identity, where the reference terminal identity is one of multiple identification identities.

In an embodiment, in case that the first terminal identity is multiple identification identities, determining, by the first determining unit 1410, the paging occasion based on the first terminal identity includes:

calculating, by the first determining unit 1410, candidate paging occasions based on the multiple identification identities, respectively; and

determining, by the first determining unit 1410, the paging occasion from the candidate paging occasions;

Alternatively, the apparatus further includes a first transmitting unit, the first transmitting unit is used for: transmitting an identification identity corresponding to the paging occasion and/or a paging cycle corresponding to the paging occasion to an access network device.

In an embodiment, the reference terminal identity is determined through negotiation between the terminal and the access network device; or
the reference terminal identity is pre-agreed between the terminal and the access network device.

Alternatively, the apparatus further includes a first paging cycle negotiating unit, the first paging cycle negotiating unit is used for:

negotiating a paging cycle with each of the multiple network functions; or

negotiating a paging cycle with a target network function, where the target network function is one of the multiple network functions;

where the paging cycle is used to determine the paging occasion.

In an embodiment, the apparatus further includes a trigger determining unit, used for:
in case that the paging message is received, determining, based on paging identity information carried in the paging message, a network function that triggers a paging.

In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

In an embodiment, the first transmitting unit is further used for transmitting a service request message to an access network device, where the service request message is used to initiate a service request to the network function that triggers the paging.

The method and the apparatus provided in the embodiments of the present application are based on the same concept, and since the principles of the paging method performed by the terminal and the paging apparatus for use in the terminal to solve the problem are similar and may achieve the same technical effects, the implementation of the apparatus and the methods may be referred to each other, and details are not repeated here.

Referring to FIG. 15, FIG. 15 is a second schematic structural diagram of a paging apparatus according to an embodiment of the present application. The paging apparatus according to the embodiment of the present application, for use in an access network device, includes:

a second receiving unit 1510, used for receiving a paging message transmitted from a core network, where the paging message carries a second terminal identity;

a second determining unit 1520, used for determining a paging occasion based on the second terminal identity; and

a second transmitting unit 1530, used for transmitting the paging message to the terminal at the paging occasion;

where the second terminal identity is associated with multiple network functions of the core network.

In an embodiment, the second terminal identity is any of following:

a universal terminal identity, where the universal terminal identity is used by the core network to identify the terminal, the universal terminal identity is composed of multiple identification identities, each of the multiple identification identities is assigned to the terminal by a corresponding network function and used by the corresponding network function to identify the terminal; or

a reference terminal identity, where the reference terminal identity is one of multiple identification identities.

In an embodiment, the reference terminal identity is pre-agreed;

the reference terminal identity is determined through negotiation between the access network device and the terminal; or

the reference terminal identity is determined through negotiation between the access network device and the core network.

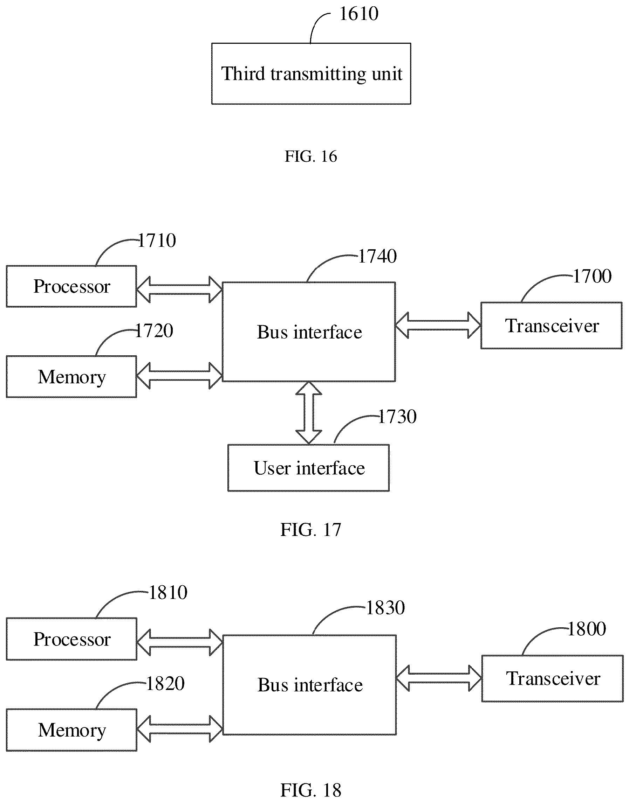

In an embodiment, the second receiving unit 1510 is further used for receiving a service request message transmitted from the terminal, where the service request message is used to initiate a service request to a network function that triggers a paging; and
the second determining unit 1520 is used for transmitting the service request message to the network function that triggers the paging.
The method and the apparatus provided in the embodiments of the present application are based on the same concept, and since the principles of the paging method performed by the access network device and the paging apparatus for use in the access network device to solve the problem are similar and may achieve the same technical effects, the implementation of the apparatus and the methods may be referred to each other, and details are not repeated here.
Referring to FIG. 16, FIG. 16 is a third schematic structural diagram of a paging apparatus according to an embodiment of the present application. The paging apparatus according to the embodiment of the present application, for use in a network function, includes:

a third transmitting unit 1610, used for transmitting a paging message to an access network device, where the paging message carries a second terminal identity;
where the second terminal identity is associated with multiple network functions of the core network and is used by the access network device to determine a paging occasion.

In an embodiment, the second terminal identity is any of:

a universal terminal identity, where the universal terminal identity is used by the core network to identify the terminal, the universal terminal identity is composed of multiple identification identities, each of the multiple identification is assigned to the terminal by a corresponding network function and used by the corresponding network function to identify the terminal; or

a reference terminal identity, where the reference terminal identity is one of multiple identification identities.

In an embodiment, the reference terminal identity is pre-agreed;

the reference terminal identity is determined through negotiation between the network function and the terminal;

the reference terminal identity is determined through negotiation between the network function and the access network device; or

the reference terminal identity is received by the network function from the terminal, or from the access network device.

In an embodiment, the apparatus further includes a third receiving unit,

in case that the second terminal identity is the universal terminal identity, before transmitting the paging message to the access network device, the third receiving unit is used for receiving the universal terminal identity synchronized by other network functions; or

the apparatus further includes a third determining unit and a third synchronizing unit,

in case that the second terminal identity is the universal terminal identity, before transmitting the paging message to the access network device, the third determining unit is used for determining the universal terminal identity based on the multiple identification identities;

the third synchronizing unit is used for synchronizing the universal terminal identity with other network functions, and

the third transmitting unit 1610 is further used for transmitting the universal terminal identity to the terminal.

In an embodiment, the paging message further carries paging identity information, where the paging identity information is used to indicate a network function that triggers a paging to the terminal.
In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

Alternatively, the apparatus further includes a second paging cycle negotiating unit, the second paging cycle negotiating unit is used for:

negotiating a paging cycle with the terminal;

negotiating a paging cycle with the terminal and synchronizing the paging cycle with other network functions; or

receiving a paging cycle synchronized by other network functions.

In an embodiment, the apparatus further includes a third receiving unit, used for:
receiving a service request message transmitted from the access network device.
The method and the apparatus provided in the embodiments of the present application are based on the same concept, and since the principles of the paging method performed by the network function and the paging apparatus for use in the network function to solve the problem are similar and may achieve the same technical effects, the implementation of the apparatus and the methods may be referred to each other, and details are not repeated here.
It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.
If the integrated unit is implemented in the form of a software functional unit and sold or used as a separate product, it may be stored in a computer readable storage medium. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

FIG. 17 is a schematic structural diagram of a terminal according to an embodiment of the present application. As shown in FIG. 17, the terminal includes a memory 1720, a transceiver 1700, and a processor 1710, where the processor 1710 and the memory 1720 may also be arranged physically separately.

The memory 1720 is used for storing a computer program; the transceiver 1700 is used for transmitting and receiving data under control of the processor 1710; and the processor 1710 is used for executing operations corresponding to any of the paging method performed by the terminal according to the embodiments of the present application based on an obtained executable instruction by calling the computer program stored in the memory 1720, for example:

determining a paging occasion based on a first terminal identity; and

monitoring a paging message at the paging occasion, where the paging message is triggered by a core network;

where the first terminal identity is associated with multiple network functions of the core network, and the first terminal identity is pre-received and used to identify the terminal.

In an embodiment, the transceiver 1700 is used for receiving and transmitting data under control of the processor 1710.

In FIG. 17, a bus interface 1740 may include any number of interconnected buses and bridges, which are connected together through various circuits of one or more processors represented by processor 1710 and one or more memories represented by the memory 1720. The bus interface 1740 may also connect together various other circuits, such as peripherals, voltage regulators, and power management circuits, which are well known in the art, and therefore will not be further described in the present application. The bus interface provides an interface. The transceiver 1700 may be multiple elements, i.e., including a transmitter and a receiver, units for providing communication with various other devices over transmission media including wireless channels, wired channels, fiber optic cables, and the like. For different terminals, the terminals may further include a user interface 1730. The user interface 1730 may also be an interface capable of externally or internally connecting the required equipment, and the connected equipment includes, but not limited to, a keypad, a display, a speaker, a microphone, a joystick, and the like.

The processor 1710 is responsible for managing the bus architecture and general processing, and the memory 1720 may store data used by the processor 1710 when performing operations.

The processor 1710 may be a central processing unit (CPU), an application specific integrated circuit (ASIC), a field-programmable gate array (FPGA), or a complex programmable logic device (CPLD), the processor may also use a multi-core architecture.

In an embodiment, the first terminal identity is any of following:

multiple identification identities, where each of the multiple identification identities is assigned to the terminal by a corresponding network function and used by the corresponding network function to identify the terminal;

a universal terminal identity, where the universal terminal identity is used by the core network to identify the terminal, and composed of multiple identification identities; or

a reference terminal identity, where the reference terminal identity is one of multiple identification identities.

In an embodiment, in case that the first terminal identity is the multiple identification identities, determining the paging occasion based on the first terminal identity includes:

calculating candidate paging occasions based on the multiple identification identities, respectively; and

determining the paging occasion from the candidate paging occasion.

In an embodiment, the operations further include:
transmitting an identification identity corresponding to the paging occasion and/or a paging cycle corresponding to the paging occasion to an access network device.

In an embodiment, the reference terminal identity is pre-agreed;

the reference terminal identity is determined through negotiation between the terminal and the access network device;

the reference terminal identity is determined through negotiation between the terminal and the core network; or

the reference terminal identity is received by the terminal from the access network device or from the core network.

In an embodiment, the operations further include:

negotiating a paging cycle with each of the multiple network functions; or

negotiating a paging cycle with a target network function, where the target network function is one of the multiple network functions;

where the paging cycle is used to determine the paging occasion.

In an embodiment, the operations further include:
in case that the paging message is received, determining, based on paging identity information carried in the paging message, a network function that triggers a paging.
In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

In an embodiment, the operations further include:
transmitting a service request message to an access network device, where the service request message is used to initiate a service request to the network function that triggers the paging.
It should be noted here that the above-mentioned terminal according to the embodiments of the present application may implement all the method steps implemented by the above-mentioned paging method embodiments performed by the terminal, and may achieve the same effect. The same parts and beneficial effects as the same method embodiments is not repeated in the present application.
FIG. 18 is a schematic structural diagram of an access network device according to an embodiment of the present application. As shown in FIG. 18, the access network device includes a memory 1820, a transceiver 1800, and a processor 1810.
The memory 1820 is used for storing a computer program; the transceiver 1800 is used for receiving and transmitting data under control of the processor; the processor 1810 is used for reading the computer program in the memory 1820 and perform the following operations:

receiving a paging message transmitted from a core network, where the paging message carries a second terminal identity;

determining a paging occasion based on the second terminal identity; and

transmitting the paging message to the terminal at the paging occasion;

where the second terminal identity is associated with multiple network functions of the core network.

In an embodiment, the transceiver 1800 is used for receiving and sending data under control of the processor 1810.
In FIG. 18, a bus architecture may include any number of interconnected buses and bridges, which are linked together through various circuits of one or more processors represented by the processor 1810 and one or more memories represented by the memory 1820. The bus architecture may also link together various other circuits, such as peripherals, voltage regulators, and power management circuits, which are well known in the art, and therefore will not be further described in the present application. The bus interface 1830 provides an interface. Transceiver 1800 may be multiple elements, i.e., including a transmitter and a receiver, units for providing communication with various other devices over transmission media including wireless channels, wired channels, fiber optic cables, and the like. The processor 1810 is responsible for managing the bus architecture and general processing, and the memory 302 may store data used by the processor 1810 when performing operations.
The processor 1810 may be a central processing unit (CPU), an application specific integrated circuit (ASIC), a field-programmable gate array (FPGA), or a complex programmable logic device (CPLD), the processor may also use a multi-core architecture.

In an embodiment, the second terminal identity is any of:

a universal terminal identity, where the universal terminal identity is used by the core network to identify the terminal, the universal terminal identity is composed of multiple identification identities, each of the multiple identification identities is assigned to the terminal by a corresponding network function and used by the corresponding network function to identify the terminal; or

a reference terminal identity, where the reference terminal identity is one of multiple identification identities.

In an embodiment, the reference terminal identity is pre-agreed;

the reference terminal identity is determined through negotiation between the access network device and the terminal; or

the reference terminal identity is determined through negotiation between the access network device and the core network.

In an embodiment, the operations further include:

receiving a service request message transmitted from the terminal, where the service request message is used to initiate a service request to a network function that triggers a paging; and

transmitting the service request message to the network function that triggers the paging.

It should be noted here that the above-mentioned access network device according to the embodiments of the present application may implement all the method steps implemented by the above-mentioned method embodiments performed by the access network device, and may achieve the same effect. The same parts and beneficial effects as the same method embodiments are not repeated here.

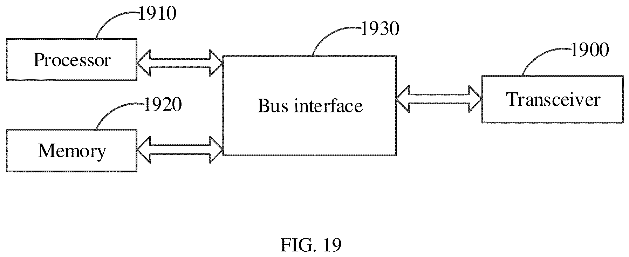

FIG. 19 is a schematic structural diagram of a network function according to an embodiment of the present application. As shown in FIG. 19, the network function includes a memory 1920, a transceiver 1900, and a processor 1910.

The memory 1920 is used for storing a computer program; the transceiver 1900 is used for receiving and transmitting data under control of the processor; the processor 1910 is used for reading the computer program in the memory 1920 and perform the following operations:

transmitting a paging message to an access network device, where the paging message carries a second terminal identity;

where the second terminal identity is associated with multiple network functions of the core network and is used by the access network device to determine a paging occasion.

In an embodiment, the transceiver 1900 is used for receiving and sending data under control of the processor 1910.

In FIG. 19, a bus architecture may include any number of interconnected buses and bridges, which are linked together through various circuits of one or more processors represented by the processor 1910 and one or more memories represented by the memory 1920. The bus architecture may also link together various other circuits, such as peripherals, voltage regulators, and power management circuits, which are well known in the art, and therefore will not be further described in the present application. The bus interface 1930 provides an interface. Transceiver 1900 may be multiple elements, i.e., including a transmitter and a receiver, units for providing communication with various other devices over transmission media including wireless channels, wired channels, fiber optic cables, and the like. The processor 1910 is responsible for managing the bus architecture and general processing, and the memory 302 may store data used by the processor 1910 when performing operations.

The processor 1910 may be a central processing unit (CPU), an application specific integrated circuit (ASIC), a field-programmable gate array (FPGA), or a complex programmable logic device (CPLD), the processor may also use a multi-core architecture.

In an embodiment, the second terminal identity is any of following:

a universal terminal identity, where the universal terminal identity is used by the core network to identify the terminal, the universal terminal identity is composed of multiple identification identities, each of the multiple identification is assigned to the terminal by a corresponding network function and used by the corresponding network function to identify the terminal; or

a reference terminal identity, where the reference terminal identity is one of multiple identification identities.

In an embodiment, the reference terminal identity is pre-agreed;

the reference terminal identity is determined through negotiation between the network function and the terminal;

the reference terminal identity is determined through negotiation between the network function and the access network device; or

the reference terminal identity is received by the network function from the terminal, or from the access network device.

In an embodiment, in case that the second terminal identity is the universal terminal identity, before transmitting the paging message to the access network device, the method further includes:

receiving the universal terminal identity synchronized by other network functions;
or

determining the universal terminal identity based on the multiple identification identities, synchronizing the universal terminal identity with other network functions, and transmitting the universal terminal identity to the terminal.

In an embodiment, the paging message further carries paging identity information, where the paging identity information is used to indicate a network function that triggers a paging to the terminal.
In an embodiment, the paging identity information includes:

paging indication information, where the paging indication information is used to indicate an identification identity corresponding to the network function that triggers the paging in the universal terminal identity; and/or

a first identification identity, where the first identification identity is assigned to the terminal by the network function that triggers the paging.

In an embodiment, before transmitting the paging message to the access network device, the method further includes:

negotiating a paging cycle with the terminal;

negotiating a paging cycle with the terminal and synchronizing the paging cycle with other network functions; or

receiving a paging cycle synchronized by other network functions.

In an embodiment, the operations further include:
receiving a service request message transmitted from the access network device.
It should be noted here that the above-mentioned network function according to the embodiments of the present application may implement all the method steps implemented by the above-mentioned method embodiments performed by the network function, and may achieve the same effect. The same parts and beneficial effects as the same method embodiments will not be repeated here.
An embodiment of the present application further provides a non-transitory computer readable storage medium storing a computer program, where the computer program causes a processor to perform the methods provided in above embodiments, including:

determining a paging occasion based on a first terminal identity; and

monitoring a paging message at the paging occasion, where the paging message is triggered by a core network;

where the first terminal identity is associated with multiple network functions of the core network, and the first terminal identity is pre-received and used to identify the terminal.

An embodiment of the present application further provides a non-transitory computer readable storage medium storing a computer program, where the computer program causes a processor to perform the methods provided in above embodiments, including:

receiving a paging message transmitted from a core network, where the paging message carries a second terminal identity;

determining a paging occasion based on the second terminal identity; and

transmitting the paging message to the terminal at the paging occasion;

where the second terminal identity is associated with multiple network functions of the core network.

An embodiment of the present application further provides a non-transitory computer readable storage medium storing a computer program, where the computer program causes a processor to perform the methods provided in above embodiments, including:

transmitting a paging message to an access network device, where the paging message carries a second terminal identity;

where the second terminal identity is associated with multiple network functions of the core network and is used by the access network device to determine a paging occasion.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As appreciated by those skilled in the art, embodiments of the present application may be provided as a method, a system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

**Claims**

1. A paging method, performed by a terminal, comprising:

   determining a paging occasion based on a first terminal identity; and
   monitoring a paging message at the paging occasion, wherein the paging message is triggered by a core network;
   wherein the first terminal identity is associated with multiple network functions of the core network, and the first terminal identity is pre-received and used to identify the terminal.

2. The method of claim 1, wherein the first terminal identity is any of following:

   multiple identification identities, wherein each of the multiple identification identities is assigned to the terminal by a corresponding network function and used by the corresponding network function to identify the terminal;
   a universal terminal identity, wherein the universal terminal identity is used by the core network to identify the terminal, and composed of multiple identification identities; or
   a reference terminal identity, wherein the reference terminal identity is one of multiple identification identities.

3. The method of claim 2, wherein in case that the first terminal identity is the multiple identification identities, determining the paging occasion based on the first terminal identity comprises:

   calculating candidate paging occasions based on the multiple identification identities, respectively; and
   determining the paging occasion from the candidate paging occasions.

4. The method of claim 3, further comprising:
   transmitting an identification identity corresponding to the paging occasion and/or a paging cycle corresponding to the paging occasion to an access network device.

5. The method of claim 2, wherein the reference terminal identity is pre-agreed;

   the reference terminal identity is determined through negotiation between the terminal and the access network device;
   the reference terminal identity is determined through negotiation between the terminal and the core network; or
   the reference terminal identity is received by the terminal from the access network device or from the core network.

6. The method of any of claims 1 to 5, further comprising:

   negotiating a paging cycle with each of the multiple network functions; or
   negotiating a paging cycle with a target network function, wherein the target network function is one of the multiple network functions;
   wherein the paging cycle is used to determine the paging occasion.

7. The method of any of claims 2 to 5, further comprising:
   in case that the paging message is received, determining, based on paging identity information carried in the paging message, a network function that triggers a paging.

8. The method of claim 7, wherein the paging identity information comprises:

   paging indication information, wherein the paging indication information is used to indicate an identification identity corresponding to the network function that triggers the paging in the universal terminal identity; and/or
   a first identification identity, wherein the first identification identity is assigned to the terminal by the network function that triggers the paging.

9. The method of claim 7, further comprising:
   transmitting a service request message to an access network device, wherein the service request message is used to initiate a service request to the network function that triggers the paging.

10. A paging method, performed by an access network device, comprising:

receiving a paging message transmitted from a core network, wherein the paging message carries a second terminal identity;

determining a paging occasion based on the second terminal identity; and

transmitting the paging message to the terminal at the paging occasion;

wherein the second terminal identity is associated with multiple network functions of the core network.

11. The method of claim 10, wherein the second terminal identity is any of following:

a universal terminal identity, wherein the universal terminal identity is used by the core network to identify the terminal, the universal terminal identity is composed of multiple identification identities, each of the multiple identification identities is assigned to the terminal by a corresponding network function and used by the corresponding network function to identify the terminal; or

a reference terminal identity, wherein the reference terminal identity is one of multiple identification identities.

12. The method of claim 11, wherein the reference terminal identity is pre-agreed;

the reference terminal identity is determined through negotiation between the access network device and the terminal; or

the reference terminal identity is determined through negotiation between the access network device and the core network.

13. The method of any of claims 10 to 12, further comprising:

receiving a service request message transmitted from the terminal, wherein the service request message is used to initiate a service request to a network function that triggers a paging; and

transmitting the service request message to the network function that triggers the paging.

14. A paging method, performed by a network function, comprising:

transmitting a paging message to an access network device, wherein the paging message carries a second terminal identity;

wherein the second terminal identity is associated with multiple network functions of the core network and is used by the access network device to determine a paging occasion.

15. The method of claim 14, wherein the second terminal identity is any of following:

a universal terminal identity, wherein the universal terminal identity is used by the core network to identify the terminal, the universal terminal identity is composed of multiple identification identities, each of the multiple identification is assigned to the terminal by a corresponding network function and used by the corresponding network function to identify the terminal; or

a reference terminal identity, wherein the reference terminal identity is one of multiple identification identities.

16. The method of claim 15, wherein the reference terminal identity is pre-agreed;

the reference terminal identity is determined through negotiation between the network function and the terminal;

the reference terminal identity is determined through negotiation between the network function and the access network device; or

the reference terminal identity is received by the network function from the terminal, or from the access network device.

17. The method of claim 15, wherein in case that the second terminal identity is the universal terminal identity, before transmitting the paging message to the access network device, the method further comprises:

receiving the universal terminal identity synchronized by other network functions;

or

determining the universal terminal identity based on the multiple identification identities, synchronizing the universal terminal identity with other network functions, and transmitting the universal terminal identity to the terminal.

18. The method of any of claims 15 to 17, wherein the paging message further carries paging identity information, wherein the paging identity information is used to indicate a network function that triggers a paging to the terminal.

19. The method of claim 18, wherein the paging identity information comprises:

paging indication information, wherein the paging indication information is used to indicate an identification identity corresponding to the network function that triggers the paging in the universal terminal identity; and/or a first identification identity, wherein the first identification identity is assigned to the terminal by the network function that triggers the paging.

20. The method of any of claims 14 to 17, wherein before transmitting the paging message to the access network device, the method further comprises:

negotiating a paging cycle with the terminal; negotiating a paging cycle with the terminal and synchronizing the paging cycle with other network functions; or receiving a paging cycle synchronized by other network functions.

21. The method of any of claims 14 to 17, further comprising: receiving a service request message transmitted from the access network device.

22. A terminal, comprising a memory, a transceiver and a processor, the memory is used for storing a computer program, the transceiver is used for receiving and transmitting data under control of the processor and the processor is used for reading the computer program in the memory and performing operations of:

determining a paging occasion based on a first terminal identity; and monitoring a paging message at the paging occasion, wherein the paging message is triggered by a core network; wherein the first terminal identity is associated with multiple network functions of the core network, and the first terminal identity is pre-received and used to identify the terminal.

23. The terminal of claim 22, wherein the first terminal identity is any of following:

multiple identification identities, wherein each of the multiple identification identities is assigned to the terminal by a corresponding network function and used by the corresponding network function to identify the terminal; a universal terminal identity, wherein the universal terminal identity is used by the core network to identify the terminal, and composed of multiple identification identities; or a reference terminal identity, wherein the reference terminal identity is one of multiple identification identities.

24. The terminal of claim 23, wherein in case that the first terminal identity is multiple identification identities, determining the paging occasion based on the first terminal identity comprises:

calculating candidate paging occasions based on the multiple identification identities, respectively; and determining the paging occasion from the candidate paging occasions.

25. The terminal of claim 24, wherein the operations further comprise: transmitting an identification identity corresponding to the paging occasion and/or a paging cycle corresponding to the paging occasion to an access network device.

26. The terminal of claim 23, wherein the reference terminal identity is pre-agreed;

the reference terminal identity is determined through negotiation between the terminal and the access network device; the reference terminal identity is determined through negotiation between the terminal and the core network; or the reference terminal identity is received by the terminal from the access network device or from the core network.

27. The terminal of any of claims 22 to 26, wherein the operations further comprise:

negotiating a paging cycle with each of the multiple network functions; or
negotiating a paging cycle with a target network function, wherein the target network function is one of the multiple network functions;
wherein the paging cycle is used to determine the paging occasion.

28. The terminal of any of claims 23 to 26, wherein the operations further comprise:
in case that the paging message is received, determining, based on paging identity information carried in the paging message, a network function that triggers a paging.

29. The terminal of claim 28, wherein the paging identity information comprises:

paging indication information, wherein the paging indication information is used to indicate an identification identity corresponding to the network function that triggers the paging in the universal terminal identity; and/or a first identification identity, wherein the first identification identity is assigned to the terminal by the network function that triggers the paging.

30. The terminal of claim 28, wherein the operations further comprise:
transmitting a service request message to an access network device, wherein the service request message is used to initiate a service request to the network function that triggers the paging.

31. An access network device, comprising a memory, a transceiver and a processor,
the memory is used for storing a computer program, the transceiver is used for receiving and transmitting data under control of the processor and the processor is used for reading the computer program in the memory and performing operations of:

receiving a paging message transmitted from a core network, wherein the paging message carries a second terminal identity;
determining a paging occasion based on the second terminal identity; and
transmitting the paging message to the terminal at the paging occasion;
wherein the second terminal identity is associated with multiple network functions of the core network.

32. The access network device of claim 31, wherein the second terminal identity is any of following:

a universal terminal identity, wherein the universal terminal identity is used by the core network to identify the terminal, the universal terminal identity is composed of multiple identification identities, each of the multiple identification identities is assigned to the terminal by a corresponding network function and used by the corresponding network function to identify the terminal; or
a reference terminal identity, wherein the reference terminal identity is one of multiple identification identities.

33. The access network device of claim 32, wherein the reference terminal identity is pre-agreed;

the reference terminal identity is determined through negotiation between the access network device and the terminal; or
the reference terminal identity is determined through negotiation between the access network device and the core network.

34. The access network device of any one of claims 31 to 33, wherein the operations further comprise:

receiving a service request message transmitted from the terminal, wherein the service request message is used to initiate a service request to a network function that triggers a paging; and
transmitting the service request message to the network function that triggers the paging.

35. A network function, comprising a memory, a transceiver and a processor,
the memory is used for storing a computer program, the transceiver is used for receiving and transmitting data under control of the processor and the processor is used for reading the computer program in the memory and performing operations of:

transmitting a paging message to an access network device, wherein the paging message carries a second terminal identity;

wherein the second terminal identity is associated with multiple network functions of the core network and is used by the access network device to determine a paging occasion.

36. The network function of claim 35, wherein the second terminal identity is any of following:

a universal terminal identity, wherein the universal terminal identity is used by the core network to identify the terminal, the universal terminal identity is composed of multiple identification identities, each of the multiple identification is assigned to the terminal by a corresponding network function and used by the corresponding network function to identify the terminal; or

a reference terminal identity, wherein the reference terminal identity is one of multiple identification identities.

37. The network function of claim 36, wherein the reference terminal identity is pre-agreed;

the reference terminal identity is determined through negotiation between the network function and the terminal;

the reference terminal identity is determined through negotiation between the network function and the access network device; or

the reference terminal identity is received by the network function from the terminal, or from the access network device.

38. The network function of claim 36, wherein in case that the second terminal identity is the universal terminal identity, before transmitting the paging message to the access network device, the operations further comprises:

receiving the universal terminal identity synchronized by other network functions;

or

determining the universal terminal identity based on the multiple identification identities, synchronizing the universal terminal identity with other network functions, and transmitting the universal terminal identity to the terminal.

39. The network function of any of claims 36 to 38, wherein the paging message further carries paging identity information, wherein the paging identity information is used to indicate a network function that triggers a paging to the terminal.

40. The network function of claim 39, wherein the paging identity information comprises:

paging indication information, wherein the paging indication information is used to indicate an identification identity corresponding to the network function that triggers the paging in the universal terminal identity; and/or

a first identification identity, wherein the first identification identity is assigned to the terminal by the network function that triggers the paging.

41. The network function of any of claims 35 to 38, wherein before transmitting the paging message to the access network device, the operations further comprise:

negotiating a paging cycle with the terminal;

negotiating a paging cycle with the terminal and synchronizing the paging cycle with other network functions; or

receiving a paging cycle synchronized by other network functions.

42. The network function of any of claims 35 to 38, wherein the operations further comprise:
receiving a service request message transmitted from the access network device.

43. A paging apparatus, for use in a terminal, comprising:

a first determining unit, used for determining a paging occasion based on a first terminal identity; and

a first monitoring unit, used for monitoring a paging message at the paging occasion, wherein the paging message is triggered by a core network;

wherein the first terminal identity is associated with multiple network functions of the core network, and the first terminal identity is pre-received and used to identify the terminal.

44. The apparatus of claim 43, wherein the first terminal identity is any of following:

multiple identification identities, wherein each of the multiple identification identities is assigned to the terminal by a corresponding network function and used by the corresponding network function to identify the terminal;
a universal terminal identity, wherein the universal terminal identity is used by the core network to identify the terminal, and composed of multiple identification identities; or
a reference terminal identity, wherein the reference terminal identity is one of multiple identification identities.

45. The apparatus of claim 44, wherein in case that the first terminal identity is multiple identification identities, the first determining unit is used for

calculating candidate paging occasions based on the multiple identification identities, respectively; and
determining the paging occasion from the candidate paging occasions.

46. The apparatus of claim 45, further comprising a first transmitting unit, used for:
transmitting an identification identity corresponding to the paging occasion and/or a paging cycle corresponding to the paging occasion to an access network device.

47. The apparatus of claim 44, wherein the reference terminal identity is pre-agreed;

the reference terminal identity is determined through negotiation between the terminal and the access network device;
the reference terminal identity is determined through negotiation between the terminal and the core network; or
the reference terminal identity is received by the terminal from the access network device or from the core network.

48. The apparatus of any of claims 43 to 47, further comprising a first paging cycle negotiating unit, used for:

negotiating a paging cycle with each of the multiple network functions; or
negotiating a paging cycle with a target network function, wherein the target network function is one of the multiple network functions;
wherein the paging cycle is used to determine the paging occasion.

49. The apparatus of any of claims 43 to 47, further comprising a trigger determining unit used for:
in case that the paging message is received, determining, based on paging identity information carried in the paging message, a network function that triggers a paging.

50. The apparatus of claim 49, wherein the paging identity information comprises:

paging indication information, wherein the paging indication information is used to indicate an identification identity corresponding to the network function that triggers the paging in the universal terminal identity; and/or
a first identification identity, wherein the first identification identity is assigned to the terminal by the network function that triggers the paging.

51. The apparatus of claim 49, wherein the first transmitting unit is further used for transmitting a service request message to an access network device, wherein the service request message is used to initiate a service request to the network function that triggers the paging.

52. A paging apparatus, for use in an access network device, comprising:

a second receiving unit, used for receiving a paging message transmitted from a core network, wherein the paging message carries a second terminal identity;
a second determining unit, used for determining a paging occasion based on the second terminal identity; and
a second transmitting unit, used for transmitting the paging message to the terminal at the paging occasion;
wherein the second terminal identity is associated with multiple network functions of the core network.

53. The apparatus of claim 52, wherein the second terminal identity is any of following:

a universal terminal identity, wherein the universal terminal identity is used by the core network to identify the terminal, the universal terminal identity is composed of multiple identification identities, each of the multiple identification identities is assigned to the terminal by a corresponding network function and used by the corresponding network function to identify the terminal; or

a reference terminal identity, wherein the reference terminal identity is one of multiple identification identities.

54. The apparatus of claim 53, wherein the reference terminal identity is pre-agreed;

the reference terminal identity is determined through negotiation between the access network device and the terminal; or
the reference terminal identity is determined through negotiation between the access network device and the core network.

55. The apparatus of any of claims 52 to 54, wherein the second receiving unit is further used for receiving a service request message transmitted from the terminal, wherein the service request message is used to initiate a service request to a network function that triggers a paging; and
the second determining unit is further used for transmitting the service request message to the network function that triggers the paging.

56. A paging apparatus, for use in a network function, comprising:

a third transmitting unit, used for transmitting a paging message to an access network device, wherein the paging message carries a second terminal identity;
wherein the second terminal identity is associated with multiple network functions of the core network and is used by the access network device to determine a paging occasion.

57. The apparatus of claim 56, wherein the second terminal identity is any of following:

a universal terminal identity, wherein the universal terminal identity is used by the core network to identify the terminal, the universal terminal identity is composed of multiple identification identities, each of the multiple identification is assigned to the terminal by a corresponding network function and used by the corresponding network function to identify the terminal; or
a reference terminal identity, wherein the reference terminal identity is one of multiple identification identities.

58. The apparatus of claim 57, wherein the reference terminal identity is pre-agreed;

the reference terminal identity is determined through negotiation between the network function and the terminal;
the reference terminal identity is determined through negotiation between the network function and the access network device; or
the reference terminal identity is received by the network function from the terminal, or from the access network device.

59. The apparatus of claim 57, further comprising a third receiving unit, wherein in case that the second terminal identity is the universal terminal identity, before transmitting the paging message to the access network device, the third receiving unit is used for:

receiving the universal terminal identity synchronized by other network functions;
or
the apparatus further comprises a third determining unit and a third synchronizing unit,
the third determining unit is used for determining the universal terminal identity based on the multiple identification identities, the third synchronizing unit is used for synchronizing the universal terminal identity used with other network functions, and the third transmitting unit is further used for transmitting the universal terminal identity to the terminal.

60. The apparatus of any of claims 57 to 59, wherein the paging message further carries paging identity information, wherein the paging identity information is used to indicate a network function that triggers a paging to the terminal.

61. The apparatus of claim 60, wherein the paging identity information comprises:

paging indication information, wherein the paging indication information is used to indicate an identification identity corresponding to the network function that triggers the paging in the universal terminal identity; and/or a first identification identity, wherein the first identification identity is assigned to the terminal by the network function that triggers the paging.

62. The apparatus of any of claims 56 to 59, further comprising a second paging cycle negotiating unit, wherein before transmitting the paging message to the access network device, the second paging cycle negotiating unit is used for:

   negotiating a paging cycle with the terminal;
   negotiating a paging cycle with the terminal and synchronizing the paging cycle with other network functions; or
   receiving a paging cycle synchronized by other network functions.

63. The apparatus of any of claims 56 to 59, further comprising a third receiving unit used for:
   receiving a service request message transmitted from the access network device.

64. A processor-readable storage medium, wherein the processor-readable storage medium stores a computer program and the computer program causes a processor to perform the paging method of any of claims 1 to 9.

65. A processor-readable storage medium, wherein the processor-readable storage medium stores a computer program and the computer program causes a processor to perform the paging method of any of claims 10 to 13.

66. A processor-readable storage medium, wherein the processor-readable storage medium stores a computer program and the computer program causes a processor to perform the paging method of any of claims 14 to 21.

FIG. 1

FIG. 2

FIG. 3

Determine a paging occasion based on a first terminal identity — 410

Monitor a paging message at the paging occasion, where the paging message is triggered by a core network — 420

FIG. 4

Receive a paging message transmitted from a core network, where the paging message carries a second terminal identity — 510

Determine a paging occasion based on the second terminal identity — 520

Transmit the paging message to the terminal at the paging occasion — 530

FIG. 5

Transmit a paging message to an access network device, where the paging message carries a second terminal identity — 610

FIG. 6

| 5G-S-TMSI$_{AMF}$ | 5G-S-TMSI$_{SMF}$ | ······ | 5G-S-TMSI$_{LMF}$ |
|---|---|---|---|

FIG. 7

UE          gNB          NF

1.Nran_xx_PagingMessageTra nsfer(5G-S-TMSI', Paging Initiator Information,XX)

2.Paging(5G-S-TMSI', Paging Initiator Information,XX)

FIG. 8

AMF

SMF

1.Namf_xx_xxReqest/Response
(SUPI,5G-S-TMSI$_{nf}$)

2.Namf_xx_xxNotofication
(SUPI,5G-S-TMSI' )

3.Namf_xx_xxReqest(SUPI,5G-S-TMSI$_{nf}$)

4.Namf_xx_xxResponse(SUPI,5G-S-TMSI' )

FIG. 9

Other NFs

First NF

Nnf_xx_xxNotofication
(SUPI,5G-S-TMSI' , location,length)

FIG. 10

| UE | RAN | NF |
|---|---|---|

1.Nran_xx_xxPagingT
ransfer (B-5G-S-
TMSI, xx,NAS(5G-
S-MSI$_{NF}$,xx))

2.Calculate a paging occasion
based on B-5G-S-TMSI

3.Paging Message
(xx,5G-S-TMSI$_{NF}$,xx)

4. Determine, based on
5G-S-TMSINF, an NF
that triggers a paging, and
initiate a service request
process to the NF

FIG. 11

| UE | AMF | NF |
|---|---|---|

1.NAS Message
(DRX cycle,xx)

2.Namf_xx_xxNotitifation
(DRX cycle,xx)

FIG. 12

UE | AMF | NF | UDM/UDR /NRF

1.NAS Message (DRX cycle,xx)

2.Nnf_xx_xxTransfer(DRX cycle,xx)

3.Nnf_xx_xxSys (DRX cycle,xx)

FIG. 13

1410

First determining unit

1420

First monitoring unit

FIG. 14

1510

Second receiving unit

1520

Second determining unit

1530

Second transmitting unit

FIG. 15

```
        ┌─ 1610
┌──────────────────────────┐
│ Third transmitting unit   │
└──────────────────────────┘
```

FIG. 16

```
  ┌─1710                    ┌─1740                        ┌─1700
┌────────────┐          ┌──────────────────┐          ┌──────────────┐
│ Processor  │ ⟺        │                  │ ⟺        │ Transceiver  │
└────────────┘          │                  │          └──────────────┘
  ┌─1720                 │   Bus interface  │
┌────────────┐          │                  │
│  Memory    │ ⟺        │                  │
└────────────┘          └──────────────────┘
                                ⟺
                                   ┌─1730
                         ┌──────────────────┐
                         │  User interface  │
                         └──────────────────┘
```

FIG. 17

```
  ┌─1810                    ┌─1830                        ┌─1800
┌────────────┐          ┌──────────────────┐          ┌──────────────┐
│ Processor  │ ⟺        │                  │ ⟺        │ Transceiver  │
└────────────┘          │   Bus interface  │          └──────────────┘
  ┌─1820                 │                  │
┌────────────┐          │                  │
│  Memory    │ ⟺        │                  │
└────────────┘          └──────────────────┘
```

FIG. 18

Processor ~1910

Memory ~1920

Bus interface ~1930

Transceiver ~1900

FIG. 19

## INTERNATIONAL SEARCH REPORT

| | International application No. |
|---|---|
| | **PCT/CN2024/078538** |

| A. | CLASSIFICATION OF SUBJECT MATTER |
|---|---|

H04W68/00(2009.01)i; H04W8/24(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP: 寻呼, 窗, 时机, 标识, 确定, 网络功能, 配置, 分配, paging, window, occasion, ID, TMSI, determine, NF, configure, allocate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108605281 A (TELEFONAKTIEBOLAGET LM ERICSSON (PUBL)) 28 September 2018 (2018-09-28) <br> see description, paragraphs 114-201 | 1, 6, 10, 13, 14, 20-22, 27, 31, 34, 35, 41-43, 48, 52, 55, 56, 62-66 |
| A | CN 105682082 A (BAICELLS TECHNOLOGIES CO., LTD.) 15 June 2016 (2016-06-15) <br> entire document | 1-66 |
| A | CN 115396820 A (HUAWEI TECHNOLOGIES CO., LTD.) 25 November 2022 (2022-11-25) <br> entire document | 1-66 |
| A | CN 112752251 A (CHINA MOBILE COMMUNICATION CO., LTD. RESEARCH INSTITUTE; CHINA MOBILE COMMUNICATIONS GROUP CO., LTD.) 04 May 2021 (2021-05-04) <br> entire document | 1-66 |
| A | CN 114390675 A (VIVO MOBILE COMMUNICATION CO., LTD.) 22 April 2022 (2022-04-22) <br> entire document | 1-66 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 May 2024** | **28 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/078538**

**C.    DOCUMENTS CONSIDERED TO BE RELEVANT**

| Category* | Citation of document, with indication, where appropriate, of the relevant passages | Relevant to claim No. |
|---|---|---|
| A | NOKIA. "S3-170662, "Avoid IMSI Paging""<br>*3GPP tsg_sa\WG3_Security,* No. TSGS3_86b_Busan, 20 March 2017 (2017-03-20),<br>entire document | 1-66 |

Form PCT/ISA/210 (second sheet) (July 2022)

**INTERNATIONAL SEARCH REPORT**
Information on patent family members

International application No.

**PCT/CN2024/078538**

| Patent document cited in search report | | | Publication date (day/month/year) | Patent family member(s) | | | Publication date (day/month/year) |
|---|---|---|---|---|---|---|---|
| CN | 108605281 | A | 28 September 2018 | WO | 2017135857 | A1 | 10 August 2017 |
| | | | | EP | 3412069 | A1 | 12 December 2018 |
| | | | | EP | 3412069 | B1 | 13 November 2019 |
| | | | | US | 2019037531 | A1 | 31 January 2019 |
| | | | | US | 10506552 | B2 | 10 December 2019 |
| CN | 105682082 | A | 15 June 2016 | None | | | |
| CN | 115396820 | A | 25 November 2022 | None | | | |
| CN | 112752251 | A | 04 May 2021 | None | | | |
| CN | 114390675 | A | 22 April 2022 | None | | | |

Form PCT/ISA/210 (patent family annex) (July 2022)

**EP 4 704 476 A1**

**Patent documents cited in the description**

- CN 202310484697